# EUROPEAN PATENT SPECIFICATION

(11) **EP 2 365 993 B1**
(45) Date of publication and mention of the grant of the patent: **21.06.2017**
(21) Application number: 09735942.6
(22) Date of filing: 26.05.2009
(51) Int. Cl.: C08J 3/20, C08K 7/00

(54) **STRUCTURALLY ENHANCED PLASTICS WITH FILLER REINFORCEMENTS**
STRUKTURELL VERBESSERTE PLASTIKMATERIALIEN MIT FÜLLSTOFFVERSTÄRKUNGEN
PLASTIQUE RENFORCÉ STRUCTURELLEMENT AVEC DES RENFORTS DE CHARGE

(30) Priority: 26.03.2008 US 70876 P
(43) Date of publication of application: 21.09.2011
(73) Proprietor: Ecopuro, LLC, Denver, CO 80202 (US)
(72) Inventor: Johnson, William Lee, Oklahoma 74344 (US)
(74) Representative: Leppard, Andrew John
(86) International application number: PCT/US2009/045180
(87) International publication number: WO 2009/132361

(56) References cited:
- EP-A- 1 563 983
- WO-A-01/83371
- WO-A-2006/101440
- WO-A-2008/079438
- GB-A- 2 143 838
- US-A- 5 945 478

## Description

### FIELD OF THE INVENTION

A composition for promoting kinetic mixing of additives within a non-linear viscosity zone of a fluid such as a thermoplastic material.

### BACKGROUND OF THE INVENTION

An extrusion process is one of the most economic methods of manufacturing to produce engineering structural materials. Typically, an extrusion process is used to manufacture lengths of extruded members having a uniform cross-section. The cross-section of the members may be of various simple shapes such as circular, annular, or rectangular. The cross-section of the members may also be very complex, including internal support structures and/or having an irregular periphery.

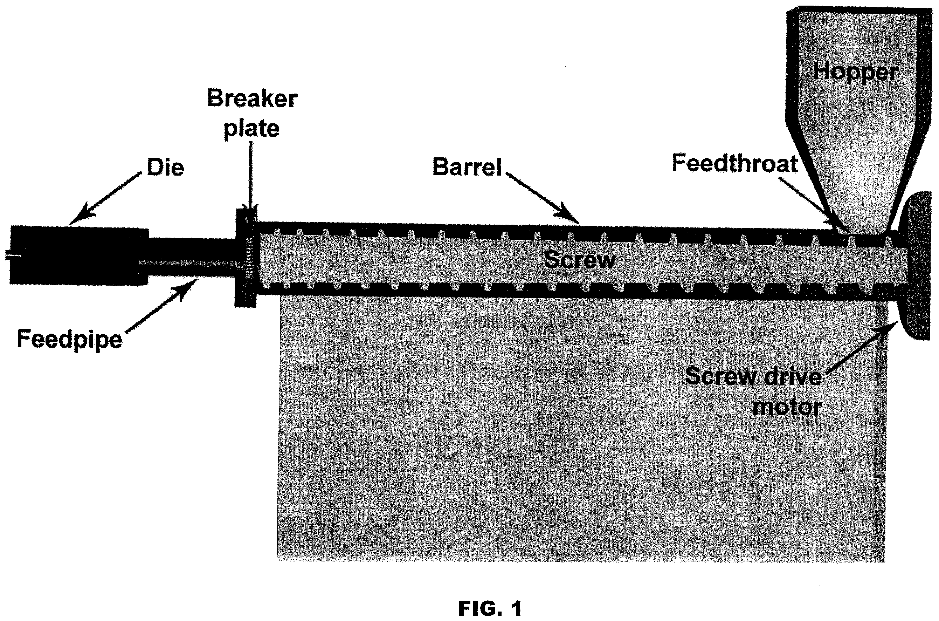

Typically, an extrusion process utilizes thermoplastic polymer compounds that are introduced into a feed hopper. Thermoplastic polymer compounds can be in powder, liquid, cubed, palletized and/or any other extrudable form. The thermoplastic polymer can be virgin, recycled, or a mixture of both. An example of a typical extruder is shown in FIG. 1.

The plastic industry has used fillers to lower resin costs during manufacturing. Typical fillers include calcium carbonate, talc, wood fiber, and a variety of others. In addition to providing a cost savings, adding fillers to plastics reduces the coefficient of thermal expansion, increases mechanical strength, and in some cases lowers the density.

Calcium carbonate and talc have no structural strength or fiber orientation to improve structural stability. Talc is bonded together by weak Van der Waal's forces, which allow the material to cleave again and again when pressure is applied to its surface. Even though test results indicate that talc imparts a variety of benefits to polypropylene, for instance higher stiffness and improved dimensional stability, talc acts like a micro-filler with lubricating properties.

Calcium carbonate has similar properties, but has a water absorption problem, which limits its application because of environmental degradation. Talc avoids this problem since it is hydrophobic.

Wood fiber adds some dimensional stability because of the fiber characteristics interaction with the plastic but wood fiber also suffers from environmental degradation. All three of these common fillers are economically feasible but are structurally limited.

The plastics industry has been striving towards improving scratch and/or mar resistance and aesthetic appearance for several decades. Many improvements have been made over the last decade to increase scratch and mar resistance but the missing technology still eludes the plastic industry and their scientists. One challenge is how to make plastic harder and maintain cost without hindering the aesthetic appearance. Applicant is aware of no economical structural enhancing filler that addresses the issues of increasing scratching and mar resistance, even though research efforts have focused on farm waste fibers such as rice hulls, sugar cane fiber, wheat straw and a variety of other fillers to be used as low-cost, structural fillers inside plastics. One explanation relates to the technology gap of structural fillers to enhance physical properties with a focus on cost rather than with a focus on plastic integrity.

There are three types of commonly used mixing principles related to adding fillers to plastics:
1. Static mixing: liquids flowing around fixed objects either by force produced flow by pressure through mechanical means or gravity induced flow.
2. Dynamic mixing: liquid induced mixing by mechanical agitation with typical impellers both blade and sheer designs as well as dual or single screw agitation.
3. Kinetic mixing: liquid is mixed by velocity impacts on a surface or impacts of two or more liquids impinging on each other.

All three of the above mixing methods have one thing in common that hinders the optimizing of mixing regardless of the fluid being combined and regardless of whether the materials being mixed are polar, nonpolar, organic or inorganic etc. or if it is a filled material with compressible or non-compressible fillers.

All incompressible fluids have a wall effect or a boundary layer effect where the fluid velocity is greatly reduced at the wall or mechanical interface. Static mixing systems use this boundary layer to fold or blend the liquid using this resistive force to promote agitation.

Dynamic mixing, regardless of the geometry of mixing blades or turbine end up with dead zones and incomplete mixing because of the boundary layer. Dynamic mixing uses high shear and a screw blade designed to use the boundary layer to promote friction and compression by centrifugal forces to accomplish agitation while maintaining an incomplete mixed boundary layer on mechanical surfaces.

Kinetic mixing suffers from boundary layer effects on velocity profiles both on the incoming streams and at the injector tip. However, this system suffers minimal effects of boundary layer except for transport fluid phenomena.

A further explanation of the boundary layer follows. Aerodynamic forces depend in a complex way on the viscosity of the fluid. As the fluid moves past the object, the molecules right next to the surface stick to the surface. The molecules just above the surface are slowed down in their collisions with the molecules sticking to the surface. These molecules in turn slow down the flow just above them. The farther one moves away from the surface, the fewer the collisions affected by the object surface. This creates a thin layer of fluid near the surface in which the velocity changes from zero at the surface to the free stream value away from the surface. Engineers call this layer the boundary layer because it occurs on the boundary of the fluid.

As an object moves through a fluid, or as a fluid moves past an object, the molecules of the fluid near the object are disturbed and move around the object. Aerodynamic forces are generated between the fluid and the object. The magnitude of these forces depend on the shape of the object, the speed of the object, the mass of the fluid going by the object and on two other important properties of the fluid; the viscosity, or stickiness, and the compressibility, or springiness, of the fluid. To properly model these effects, aerospace engineers use similarity parameters which are ratios of these effects to other forces present in the problem. If two experiments have the same values for the similarity parameters, then the relative importance of the forces are being correctly modeled.

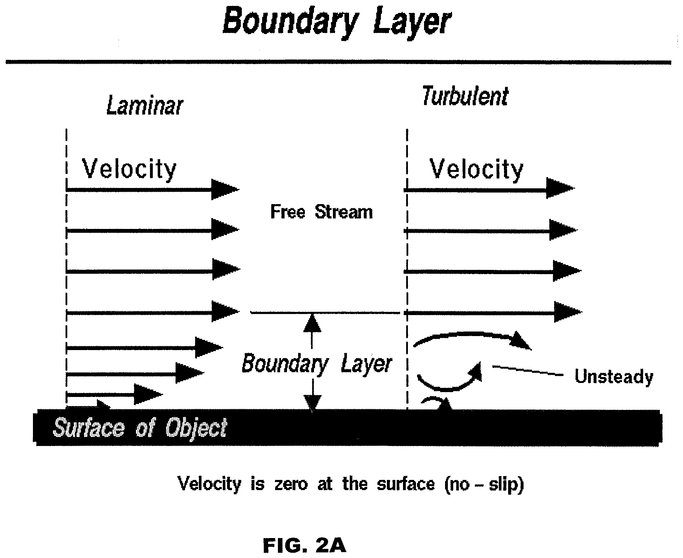

FIG. 2A shows the streamwise velocity variation from free stream to the surface. In reality, the effects are three dimensional. From the conservation of mass in three dimensions, a change in velocity in the streamwise direction causes a change in velocity in the other directions as well. There is a small component of velocity perpendicular to the surface which displaces or moves the flow above it. One can define the thickness of the boundary layer to be the amount of this displacement. The displacement thickness depends on the Reynolds number, which is the ratio of inertial (resistant to change or motion) forces to viscous (heavy and gluey) forces and is given by the equation: Reynolds number (Re) equals velocity (V) times density (r) times a characteristic length (1) divided by the viscosity coefficient (*µ*), i.e., Re = V * r * 1 /*µ*.

As can be seen in FIG. 2A, boundary layers may be either laminar (layered), or turbulent (disordered) depending on the value of the Reynolds number. For lower Reynolds numbers, the boundary layer is laminar and the streamwise velocity changes uniformly as one moves away from the wall, as shown on the left side of FIG. 2A. For higher Reynolds numbers, the boundary layer is turbulent and the streamwise velocity is characterized by unsteady (changing with time) swirling flows inside the boundary layer. The external flow reacts to the edge of the boundary layer just as it would to the physical surface of an object. So the boundary layer gives any object an "effective" shape which is usually slightly different from the physical shape. The boundary layer may lift off or "separate" from the body and create an effective shape much different from the physical shape. This happens because the flow in the boundary has very low energy (relative to the free stream) and is more easily driven by changes in pressure. Flow separation is the reason for airplane wing stall at high angle of attack. The effects of the boundary layer on lift are contained in the lift coefficient and the effects on drag are contained in the drag coefficient.

### Boundary-layer flow

That portion of a fluid flow, near a solid surface, is where shear stresses are significant and inviscid-flow assumption may not be used. All solid surfaces interact with a viscous fluid flow because of the no-slip condition, a physical requirement that the fluid and solid have equal velocities at their interface. Thus, a fluid flow is retarded by a fixed solid surface, and a finite, slow-moving boundary layer is formed. A requirement for the boundary layer to be thin is that the Reynolds number of the body be large, 10³ or more. Under these conditions the flow outside the boundary layer is essentially inviscid and plays the role of a driving mechanism for the layer.

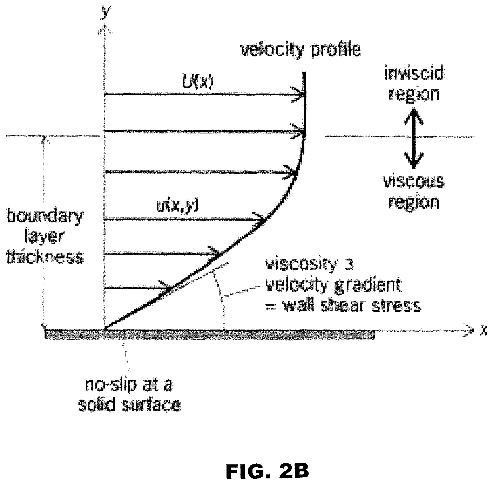

Referring now to FIG. 2B, a typical low-speed or laminar boundary layer is shown in the illustration. Such a display of the streamwise flow vector variation near the wall is called a velocity profile. The no-slip condition requires that *u*(x, 0) = 0, as shown, where u is the velocity of flow in the boundary layer. The velocity rises monotonically with distance y from the wall, finally merging smoothly with the outer (inviscid) stream velocity U(x). At any point in the boundary layer, the fluid shear stress/*ταµ* is proportional to the local velocity gradient, assuming a Newtonian fluid. The value of the shear stress at the wall is most important, since it relates not only to the drag of the body but often also to its heat transfer. At the edge of the boundary layer, *ταµ* approaches zero asymptotically. There is no exact spot where *ταµ* = 0, therefore the thickness δ of a boundary layer is usually defined arbitrarily as the point where u = 0.99U.

GB 2 143 838 A discloses extruded unsaturated polyester resin compositions.

WO 2006/101440 A1 discloses a material composition comprising a particulate or granulate material and a binder which is provided as a coating on the particles or grains of the material.

WO 01/83371 A2 discloses highly delaminated hexagonal boron nitride powders and a process for making such powders.

EP 1 563 983 A1 discloses a process for preparing extruded articles by flowing a heat plastified stream of extruded resinous thermoplastic material through an extrusion orifice. A co-extrusion arrangement is provided where a core stream is extruded and at least one boundary stream is extruded on the outside of the core stream.

US 5,945,478 discloses improving the surface smoothness of a thermoplastic polymer during extrusion by incorporating foam cell nucleating agents into the polymer and extruding the polymer under laminar flow to form unfoamed extrudate.

WO 2008/079438 A1 discloses a mouldable composition comprising an organic polymer and a further composition comprising graphite and boron nitride.

### SUMMARY OF THE INVENTION

One aspect provides a method of increasing flow through a process equipment as claimed in claim 1.

This patent focuses on technology breakthroughs on boundary layer micro-and nano mixing, i.e., on the effects of structural mechanical fillers producing micron and nano mixing properties using the static film principal of the boundary layer coupled with the coefficient of friction upon a moving particle in the fluid boundary zone of fluid flowing around a solid particle to promote accelerated mixing.

Structural filler particle geometry is based on the fundamental principle of surface roughness, promoting increased adherence to the zero velocity zone in the boundary layer. The boundary layer is where the material has its strongest adhesion force or stickiness present. By using a particle that has a rough and/or sharp particle surface, the adhesion to the non-slip zone is increased, which promotes better surface adhesion than a smooth particle with little to no surface characteristics. The ideal filler particle size will differ between polymers because viscosity differs as well as mixing mechanics produced by sheer forces and surface polishing in mechanical surfaces, which creates a variation in boundary layer thickness. A rough and/or sharp particle surface allows the particle to function as a rolling kinetic mixing blade in the boundary layer. The technology breakthrough embodied in this patent focuses on a hardened particle with sharpened edges rolling along the boundary layer producing micro mixing with agitation over the surface area in which the boundary layer exist.

Advantages of this technology include:
- Cost savings through the replacement of expensive polymers with inexpensive structural material.
- Cost savings by increasing the ability to incorporate more organic material into plastic.
- Cost savings by increasing productivity with high levels of organic and/or structural materials.
- Better disbursement of additives and or fillers through increased mixing on the large mechanical surfaces produced by the boundary mixing.
- Better mixing of polymers by grinding and cutting effects of the particles rolling along the large surface area as the velocity and compression of the polymers impact the surface during normal mixing operations.
- Reduction of coefficient of friction on mechanical surfaces caused by boundary layer effects with drag which is replaced by rolling kinetic friction of a hard particle in the boundary layers.
- Increased production of plastic manufacturing by reduction of the coefficient of friction in the boundary layer for extruded, blown or injection molding processes where the coefficient of friction directly affects the production output.
- Surface quality improvement on plastics with or without fillers due to the polish affects caused by kinetic mixing in the boundary layer on all mechanical surfaces including dyes, molds and etc. that the materials flow in and around during the finishing process.
- Promotion of boundary layer removal by kinetic mixing thereby having the property of self-cleaning of the boundary layer.
- Enhanced heat transfer due to kinetic mixing in the boundary layer which is considered to be a stagnant film where the heat transfer is dominantly conduction but the mixing of the stag film produces forced convection at the heat transfer surface.

Solid particles used for kinetic mixing in boundary layer need to have following characteristics:
- The physical geometry of particles should have a characteristic that allows the particle the ability to roll or tumble along the boundary layer surface.
- The mixing efficiency of particles increases with surface roughness to interact with zero velocity zone or non-slip polymer surface to promote kinetic friction rather than static friction.
- Particles should be sufficiently hard so that the fluid is deformed around particle for promoting kinetic mixing through the tumbling or rolling effect of the particle.
- Particles should be size proportional to the boundary layer of materials being used so that the particles roll or tumble using kinetic rolling friction so that the particles are not drug within the boundary layer, which increases the negative effects of the boundary layer based on increased surface roughness restricting flow or can produce the removal of the particle out of the boundary layer into the bulk fluid.
- Particles should be able to reconnect in the boundary layer from the bulk fluid during the mixing process based on particle size and surface roughness.
- Particles can be solid or porous materials, manmade or naturally occurring minerals and or rocks.

### Physical geometry of particles:

Spherical particles are not ideal because of the following two phenomenas that take place simultaneously. The first phenomena relates to the surface friction of the particle in the non-slip zone and the second relates to the driving force applied to the particle by fluid velocity, which affects the ability of the particle to roll or tumble. The driving force is produced by fluid flow on the upper half of the boundary layer. Particle shapes can be spherical, triangular, diamond, square or etc., but semi-flat or flat objects are less desirable because they do not tumble well. Semi-flat or flat objects tumble less well because the cross-sectional surface area has little resistance to fluid friction applied to its thickness. However, since agitation in the form of mixing is desired, awkward forms of tumbling are beneficial since the awkward tumbling creates dynamic random generating mixing zones. These random mixing zones are analogous to having big mixing blades operating with little mixing blades. Some turn fast and some turn slow, but the end result is that they are all mixing. In a more viscous material, which has less inelastic properties, the kinetic mixing by the particles will produce a chopping and grinding effect due to surface roughness and sharp edges of the particles.

Typical extruded, as well as injection molding plastics are PP, PE, PB HDPP, HDPE, HDPB, Nylon, ABS and PVC, which are some of the types of plastics used in industry, in which the hardness is proportional to the material properties of the plastic. By adding hard fillers into the plastic, a tougher more durable plastic may be reformulated that is more scratch and/or mar resistant than the inherent physical properties of the plastic. Common fillers are calcium carbonate and talc, each having a Mohs hardness scale rating of 1. However, it is desirable to use structural fillers having a hardness of at least 2.5.

A variety of environmentally stable materials suitable for use as hard structural fillers have not been commercially evaluated by the plastic manufacturing industry. These fillers are structural, they are hard, light weight and environmentally stable. Some of the reasons why these fillers have not been used commercially is that they are difficult to formulate and handle. Additionally, these materials may not be as economically feasible as previously used fillers. The following lightweight structural fillers are similar in hardness, density and particle sizes in the micron range but have not been widely accepted for use in the plastics industry.

Glass or ceramic micro spheres have been commercially available for decades. The spheres have had some success in plastic manufacturing but they have been used mainly in the coatings, adhesives and composite market.

Perlite is a naturally occurring silicous rock used mainly in construction products, an insulator for masonry, lightweight concrete and for food additives.

Sodium potassium aluminum silicate (volcanic glass) is a micron powder used as a plastic flow modifier to improve the output as well as to produce enhanced mixing properties for additives.

The structural fillers that have been previously mentioned have a Mohs scale hardness of 5.5, which is equal to window glass, sand and a good quality steel knife blade thereby adding particles and equal hardness to typical materials that will scratch the plastic surface. These structural fillers are not held together by weak forces. Therefore, they keep their rigid shape and do not have lubricating properties associated with cleaving of weak chemical bonds between molecular layers, such as may be seen with talc. Particles having a Mohs scale hardness of 5.5 are as hard as what normally would damage the plastic surface. Therefore, resistance to scratching and/or marring by the sheer hardness of the filler incorporated into the plastic formulation is improved. The structural fillers are preferably lightweight, having a density in the ranges of 0.18-0.8 g/cm³, whereas talc and calcium carbonate have densities ranging 2.50-2.80 g/cm³. Therefore, hard structural fillers reduce the density of the plastic formula.

Micro spheres have recently become of interest for use with extruded plastics because of their improved strength, which allows them to withstand mechanical pressures without being crushed. As the strength of the micro spheres increases, the manufacture cost decreases, which makes micro spheres an ideal structural filler material for plastics.

Other filler materials for consideration include expanded Perlite. Expanded Perlite has not been commercially used by the plastic industry in extrusion processes because of its micro bubbles and tubes that are natural properties of the material and can not withstand the extrusion pressures without crushing. The crushing effect of the fillers adds to the inconsistency volume flow, which affects the dimensional stability of the extruded product, which may or may not be acceptable depending on the application. For this reason, Perlite has not reached commercial viability as structural filler in the plastics field. Perlite can be finely milled, which greatly improves the crush strength of the product, thereby allowing the material the ability to withstand mechanical extrusion pressures process, thereby gaining dimensional stability. One reason this material has not been adopted as a filler is that the material in its original form has the ability to crush under pressure.

Finely milled Perlite has the same physical properties, just a finer mesh, which will withstand higher pressures. Finely milled Perlite is currently used in water treatment systems as a filter medium.

As an example, a hard sphere rolling on a soft material travels in a moving depression. The material is compressed in front and rebounds at the rear and where the material perfectly elastic, the energy stored in compression is returned to the sphere at its rear. Actual materials are not perfectly elastic, however, so energy dissipation occurs, the result being kinetic energy of the rolling." By definition, a fluid is a material continuum that is unable to withstand a static shear stress. Unlike an elastic solid, which responds to a shear stress with a recoverable deformation, a fluid responds with an irrecoverable flow. The irrecoverable flow may be used as a driving force for kinetic mechanical mixing in the boundary layer. By using the principle of rolling kinetic friction and the increased fluid sticking at the surface of the no-slip zone to produce adherents while the velocity in the boundary layer produces the inertial force upon the particle. The inertial force rotates the particle along the surface of the mechanical process equipment regardless of mixing mechanics used, i.e., static, dynamic or kinetic.

### BRIEF DESCRIPTION OF THE DRAWINGS

FIG. 1 is a diagram of an extruder.
FIG. 2A is a graphical explanation of boundary layer concepts.
FIG. 2B is a graphical explanation of a low speed or laminar boundary layer.
FIG. 3 is a graph showing the effect of a Perlite additive on throughput of thermoplastic through an extruder.
FIG. 4 is a graph showing the effect of sodium potassium aluminum silicate on throughput of thermoplastic through an extruder.
FIG. 5 is a graph showing the effect of wood particles on throughput of thermoplastic through an extruder.

### DETAILED DESCRIPTION OF THE PREFERRED EMBODIMENTS

During a jet mill process, particles strike each other to form a sharp edge via a conchoidal fracture. Even though some particle size selections will produce different effects with differing polymer selections, it is this edge effect that produces their performance. The edge effect of sodium potassium aluminum silicate facilitates the incorporation of fillers, structural fillers, pigments, fibers and a variety of other materials into thermoplastics and polymer material.

Materials that will produce sharp edge effects upon jet milling include: pumice, Perlite, volcanic glass, sand, flint, slate and granite in a variety of other mineable materials. There are a variety of man-made materials, such as steel, aluminum, brass, ceramics and recycled and/or new window glass, that can be processed either by jet milling or other related milling processes to produce a sharp edge with small particle sizes. In addition to the listed examples, other materials may also be suitable, provided the materials have sufficient hardness, estimated to be 2.5 on the Mohs hardness scale.

It is clear to see by the Mohs hardness scale that there is a variety of materials that are harder than 2.5 that would work as likely candidates to produce sharpened edge effects, thereby working as a surface tension modifier as well as a structural filler to be incorporated in today's modern plastics, polymers, paints and adhesives. The Mohs scale is presented below.

| **Hardness** 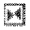 | **Mineral** 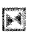 | **Absolute Hardness** 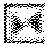 |
|---|---|---|
| 1 | Talc (Mg₃Si₄O₁₀(OH)₂) | 1 |
| 2 | Gypsum (CaSO₄·2H₂O) | 2 |
| 3 | Calcite (CaCO₃) | 9 |
| 4 | Fluorite (CaF₂) | 21 |
| 5 | Apatite (Ca₅(PO₄)₃(OH-,Cl-,F-) | 48 |
| 6 | Orthoclase Feldspar (KAlSi₃O₈) | 72 |
| 7 | Quartz (SiO₂) | 100 |
| 8 | Topaz (Al₂SiO₄(OH-,F-)₂) | 200 |
| 9 | Corundum (Al₂O₃) | 400 |
| 10 | Diamond (C) | 1500 |

The Mohs scale is a purely ordinal scale. For example, corundum (9) is twice as hard as topaz (8), but diamond (10) is almost four times as hard as corundum. The table below shows comparison with absolute hardness measured by a sclerometer.

The table below incorporates additional substances that may fall between levels:

| **Hardness** | **Substance or Mineral** |
|---|---|
| 1 | Talc |
| 2 | Gypsum |
| 2.5 to 3 | pure Gold, Silver, Aluminum |
| 3 | Calcite, Copper penny |
| 4 | Fluorite |
| 4 to 4.5 | Platinum |
| 4 to 5 | Iron |
| 5 | Apatite |
| 6 | Orthoclase |
| 6 | Titanium |
| 6.5 | Iron pyrite |
| 6 to 7 | Glass, Vitreous pure silica |
| 7 | Quartz |
| 7 to 7.5 | Garnet |
| 7 to 8 | Hardened steel |
| 8 | Topaz |
| 9 | Corundum |
| 9 to 9.5 | Carborundum |
| 10 | Diamond |
| >10 | Ultrahard Fullerite |
| >10 | Aggregated diamond nanorods |

### Particle surface characteristics:

Particles mixing efficiency is increased when surface roughness of the particle is increased. Increasing surface roughness has a twofold effect. The first effect is that surface roughness and particle geometry enhances surface adhesion to the nonslip zone or the sticky region, which produces resistance from the particle rolling or tumbling. The second effect adds resistance to the ability of the particle to roll and tumble, which results in stronger mechanical interaction with the impacting fluid. In the example of a smooth spherical ball rolling across a surface, interaction adhesion with a nonslip zone is minimal and the effects on the polymer do not produce much dynamic mixing. If the material is rough and/or sharp or both, then dynamic mixing has resistance to roll, thereby creating a blade-like tumbling effect, which produces agitation by roughness as well as mechanical kinetic rotation.

### Particle hardness and toughness

Mixing blades and high shear mixing equipment are usually made of hardened steel and polymers are softer than the mechanical agitation applied during mixing. Since these particles are passing through they need the ability to retain their shape in order to function properly. The chemical interactions between molecules have been tested and organized based on their hardness. A minimal hardness of 2.5 starting with copper on the Mohs scale or harder will be sufficient for a single pass particle to be tough enough for this mixing process.

Filler particles should be sized proportional to the boundary layer region. The size is usually defined arbitrarily as the point where u = 0.99U. Therefore, a particle theoretical starting diameter is the height measured perpendicular to the surface where u = 0.99U. There are many factors that add difficulties in calculating the parameters associated with kinetic mixing in the boundary zone, for example:
1. Filler loading, which produces modified boundary layer interaction.
2. Heat transfer through the walls creating viscosity differentials.
3. Shear effects and continually increased compression induced by screw agitation.
4. Chemical reactions where materials are changing physical properties such as viscosities, density and etc.

The dynamics of mixing is one of the most complex mechanical chemical interactions in the process industry. Particle size will vary from product to product optimization may or may not be needed. Testing indicates that there does not seem to be much difference at all between a 25 mesh product and an 800 mesh particles. In both cases, the particle affected the boundary layer mixing zone dramatically.

One approach to selecting a suitable particle size is to determine when a particular particle size creates an adverse boundary layer effect by increasing the drag coefficient. In most processes, this may be identified by monitoring an increase in amp motor draws during the mixing cycle. If the amps increase, then the particle size should be decreased.

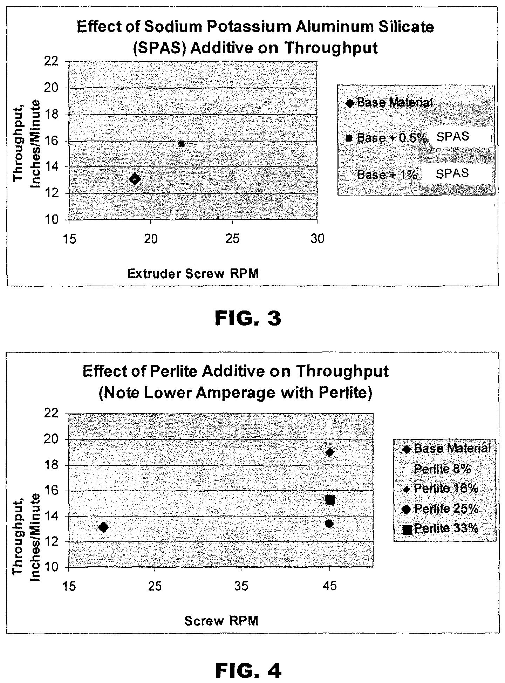

Another approach is to see if agitation speed can be increased without motor amp draw increasing, which illustrates friction reduction by kinetic mixing in the boundary layer. For example, FIG. 3 shows the throughput of a thermoplastic through an extruder at a given screw rpm. It can be seen that the additive of Perlite at 8% increases the throughput for 45 rpm of screw over the base of the extruder.

FIG. 4 shows that the additive of sodium potassium aluminum silicate powder to the base material allows the extruder to be run at higher rpm than previously was possible, thereby generating more throughput on the same equipment. Due to equipment limitations, the upper rpm limit was not able to be ascertained.

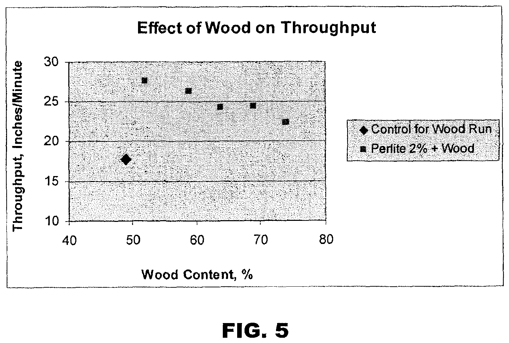

FIG. 5 shows that even when wood content is 52% to 73% of a plastic and 2% Perlite and wood mixture, superior throughput rates can still be achieved as compared to a 49% wood content without Perlite.

The chemical industry has produced test methods and tables for homogeneous liquid and the boundary layers relative thicknesses for calculating fluid flow properties for mechanical equipment selection and heat transfer properties. The same profile assumption is incorporated in this patent as a starting point of the particle size so that it will function in the boundary layer to increase mixing.

### Particle re-combining to the boundary layer

Particles can be selected to re-interact with the boundary layer if they are swept off into the bulk fluid during mixing. All fluid materials flowing through mechanical agitation take the path of least resistance. The velocity profile is affected in agitation by resistive particles to move in a viscous medium. Therefore, particles that produce resistance to fluid flow are usually directed towards the boundary layer so that the fluid can flow more freely. If the particle size is large, it can become bound in fluid suspension because the cohesive forces in the boundary layer are not sufficient enough to resist fluid velocity force being applied to the boundary layer surface, thereby sweeping the particle back into the fluid suspension. Particles with small sizes will recombine naturally in the boundary layer based on cohesion forces caused by surface roughness to promote kinetic mixing even if the particles become temporarily suspended in the bulk fluid flow.

Mineral processing technologies have been around for centuries and are highly specialized. They have the ability to separate particles by multiple methods as well as shape them into smaller particles. In the case of these highly specialized solids or porous materials to produce the desired three-dimensional blade like characteristics with sharpened edges in an aspect ratio greater than 0.7 the material must be an impact jet milled or jet milled process. Impact jet milling is a process where the process material at high velocity hits a hardened surface to produce a shattering effect of particles. In jet milling, opposing jets cause the process material to impact upon itself to produce a shattering effect, i.e., conchoidal fractures on the material. The efficiency of the kinetic mixing particle due to the resulting with surface sharpness, i.e., bladelike edges (see Appendix 1).

A ball mill process tumbles the material in a batch process removing an desired surface characteristic, e.g., sharpness. For use as particles in thermoplastic extrusions, solid minerals or rocks should be refined to particles of 10 to 20 mesh or smaller. This is the typical starting point for feeding material into the impact jet milled or jet milled process. This can be accomplished by a variety of methods that are commonly available and known by the industry to produce desired particle sizes. The preferred mineral or rock should be able to produce conchoidal fracture. This ensures knifelike edge effects with three-dimensional shapes. Refer to Appendix 1 for images of conchoidal fractures. In the case of porous minerals or rocks, the characteristics of the pores being smashed and shattering upon impact during the impact jet or jet milling process creates the three-dimensional knifelike edge shaped particles. Even though rough and uneven surfaces may be sufficient in some mixing applications, in this case, the sharper the particle the better the results. Refer to Appendix 1 for reference particle sizes after jet milling. Man-made materials such as glass, ceramics and metals as well as a variety of other types of materials meeting the minimum hardness of 2.5 by the Mohs scale that produce sharp edges with a three-dimensional shape and an aspect ratio larger than 0.7 can be used. The impact jet or jet milling process typically with these materials produce particles with a mean average of 5 - 60 µm with a single pass. Man-made materials like glass may be processed into the desired three-dimensional sharp edged particles with an aspect ratio of 0.7 and higher by means of a mechanical roller mill smashing the particles rather than jet milling. This is clearly illustrated in the pictures of Appendices of the raw feed small glass particles before jet milling.

Another filler material that is commonly used in conjunction with thermoplastics is wood fiber. To verify whether the material is actually enhancing mixing, the best way to approach this is to mix a heavy viscosity material with poor flow properties with high-density polypropylene inorganic fibers wood material that is compressible and is organic. The reason this is significant is inorganic and organic materials have a hard time mixing

A limiting factor associated with extruding wood plastic composites is "edge effects," which is where the material shows a Christmas tree like effect on the edges. In some cases, this Christmas tree effect is because of improper mixing and resistance of the material which is dragging on the dye exiting the extruder caused by boundary layer effects producing rough edges. It is common in industry to add lubricants in the formulation to overcome this problem. Lubricants allow the material to flow easier over the boundary layer, thereby allowing the throughput to increase by increasing the rpm of the extrusion screws until the edge effects appear, which indicates a maximum throughput of the process material. Test procedures used that same visual appearance as an indicator of the fastest throughput which was controlled by the extruders screw rpm.

### Experiment #1

### Base formula measured by mass percent

3% lubricant: a zinc stearate and an ethylene bissteramide wax
7% Talc: a Nicron 403 from Rio Tinto
41% Thermooplastic: HDPE with a MFI of 0.5 and a density of .953
49%: wood filler: a commercially classified 60-mesh eastern white pine purchased from American Wood fibers

The materials were dry blended with a 4' diameter by 1.5' deep drum blender for 5 minutes prior to feeding.

The extruder was a 35mm conical counter-rotating twin-screw with a 23 L/D.

The process temperature was 320° F, which was constant throughout all runs.

Two other materials were used and added to the base formula to prove concept these inert hard fillers were:
1. Sodium potassium aluminum silicate (volcanic glass), which is a micron powder used as a plastic flow modifier to improve the output as well as to produce enhanced mixing properties for additives. 800 mesh solid material hardness 5.5 Mohs scale hardness (Rheolite 800 powder); and
2. Expanded Perlite is a naturally occurring silicous rock used mainly in construction products, an insulator for masonry, light weight concrete and for food additives. 500 mesh porous material hardness 5.5 Mohs scale.

### Experiment #2

Baseline material maximum throughput before edge effects appeared rpm 19 = 13.13
Maximum throughput before edge effects using sodium potassium aluminum powder
0.5%, 22 rpm = equal 15.75 an overall increase of throughput 19.9% or approximately 20%
1%, 22 rpm = 19.5 and an overall increase of throughput 48.5% effects of Perlite additive on extrusion
Baseline material maximum throughput before edge effects appeared rpm 19 = 13.13

### Experiment #3

### Maximum throughput using Perlite

The results of Experiment #3 may be found in FIG. 2.
8%, rpm 45 = 21.13 an overall increase of throughput 60.9%
16%, rpm 45 = 21.13 an overall increase of throughput 44.7%
25%, rpm 45 = 21.13 an overall increase of throughput 5.33%
33%, rpm 45 = 21.13 an overall increase of throughput 16.1

The reason the high percentages of Perlite were chosen was to remove the possibility that this material was just a filler. The edge effects of the three-dimensional knife blades particles interacting with the boundary layer even at 33% still showed an improvement of 16% greater than the base material. Throughputs of the material could have been higher but the rpms limitation on the extruder was 45 and the material was being hand fed that is why we believe at 25% the throughput decreased because of difficulties in feeding such a lightweight material for the first time but by the time we got to 33% we had figured it out.

### Experiment #4

### Effects of wood on throughput

The results of Experiment #4 may be found in FIG. 4.

Baseline material maximum throughput before edge effects appeared rpm 25 = 17.68
concentration of Perlite was held constant at the starting point of 2%
52% rpm 45 = 27.60 an overall increase of throughput 60.9%
59%, rpm 45 = 26.25 an overall increase of throughput 48.7%
64%, rpm 45 = 17.00 an overall increase of throughput 36%
69%, rpm 45 = 24.33 an overall increase of throughput 37%
74%, rpm 30 = 19.46 overall increase of throughput 10%

The reason this test was chosen was because the loading of a lightweight organic filler into an inorganic material is increased, the edge effects show up rapidly. There was no maximum throughput reached once again because the rpm were at a maximum until 74% at which time the rpm had to be decreased to 30 to prevent edge effects. The compressible fibers in the extrusion process act like broom sweeps along the boundary layer. The wood fiber is a compressible filler whose density goes from .04g/cm to 1.2g/cm after extrusion against the wall which have the ability to encapsulate these hard particles in the boundary layer and remove them permanently. It is the effect of the three-dimensional particle shape with blades that allow this material to cut softer material not in bed in the material even when they are undergoing compression and being swept away.

There was verification that this material operates in the boundary layer and is self-cleaning. The first day of trial runs we ran the materials in the order shown by the graphs. The second day of the trial run before the wood filler experiment under the same conditions, materials and weather the baseline material had a significant increase of throughput.

Day one, baseline material maximum throughput before edge effects appeared rpm 19 = 13.13
Day two, baseline material maximum throughput before edge effects appeared rpm 25 = 17.68 with an overall increase of 34.6%
This was caused by the equipment being polished inside with the high concentrations of Perlite from day one proving itself cleaning the boundary layer. This polished surface on day two should have had negative affect with the kinetic boundary layer mixing experiment because the boundary layer would have been reduced or thinner because the coefficient of friction caused by drag on a polished surface is smaller. It implies that the material's three-dimensional shape with sharpened blade like edges provide excellent kinetic rolling capabilities even if the boundary layers thickness changes and continuous compression forces in the dynamic mixing of the extrusion process.

The boundary layer kinetic mixing particles can be introduced throughout industry in a variety of ways. For example, in the plastics market:
- The particles can be incorporated into pelletized form from the plastics manufacturer and marketed as a production increasing plastic.
- The particles can be incorporated into colored pellets by pigment suppliers and marketed as rapid dispersing palletized pigment.
- The particles can be incorporated as palletized with filler inorganic or organic and marketed as self wetting filler.
- The particles can be incorporated into dry powders and marketed as self wetting powders such as fire retardants, fungicides and fillers etc.
- The particles can be incorporated into liquids as a disbursement for liquid pigments, plasticizers, UV stabilizer, blowing agents and lubricants etc.

The boundary layer kinetic mixing particles can be utilized by the paint industry:
- The particles can be incorporated into paint to increase dispersion properties of pigments, plasticizers, fungicides, UV stabilizers, fire retardants, etc.
- The particles can be incorporated into pigments at custom mixing stations found in paint stores to help dispense less material and produce the same color through better mixing and dispersion property mixing.
- The particles can be incorporated into dry powders from additives manufacturers to help disperse fire retardants, fillers etc.
- The particles can be incorporated into spray cans to increase the mixing along the walls promoting boundary layer mixing.
- The particles can be incorporated into two component mixing materials to promote better surface area mixing or boundary layer and liquid to liquid interface boundary layer mixing urethanes, urea and epoxies etc.
- The particles can be incorporated into a lubricant package used for cleaning spray equipment through continuous recirculation with chemical cleaners.

The boundary layer kinetic mixing particles can be utilized by the lubrication industry.

The particles can be incorporated into oils to promote better flow around surfaces by lowering the boundary layer friction zone producing better wetting with no break down of temperature on this additive because it's a solid particle: cars, boats, planes, bicycles internal oil external oil, etc.

The particles can be incorporated into oils for whole household cleaning allowing the oil to spread more evenly as a thinner layer less likely to become sticky over time because the layer is thinner.

The particles can be incorporated into break fluids, hydraulic fluids of all types producing a better response to fluid motion because the boundary layer moves with kinetic mobility when pressure is applied.

The particles can be incorporated into fuel additives promotes better disbursement in the fuel as well as a self-cleaning action due to particles interacting on boundary layers throughout the whole entire flow path of combustion including the exhaust where the particles will still have a cleaning effect.

The particles can be added as a lubricant and disbursements directly from the refinery. The particles will not only help a car's lubricating effects and cleaning the system but the particles will also increase the lifespan of the gasoline pumps due to residue build up of sludge type material in the boundary layers.

The boundary layer kinetic mixing particles can be utilized to increase flow properties. Most liquid material flowing through a pipe, pump system and/or process equipment undergo boundary layer effects based on drag coefficient regardless of the surface geometry which this technology can reduce drag by promoting kinetic boundary layer mixing, with a self-cleaning effect. This will allow pipes and process equipment to perform at optimum levels.

The boundary layer kinetic mixing particles can be utilized to increase heat transfer. Because the boundary layer is being kinetically moved it is no longer a stagnant fluid heat transfer zone this increases the heat transfer properties on both sides. Now the stagnant boundary layer has turned into forced convection on both sides not just one, the fluid to fluid and the fluid to surface.

The boundary layer kinetic mixing particles can be utilized by the food, pharmaceuticals and agriculture industry. Because the selection of the particles can be approved by food and drug the processing of food through plants into its packaging can be enhanced and process equipment can mix things more thoroughly.

Thus, the present invention is well adapted to carry out the objectives and attain the ends and advantages mentioned above as well as those inherent therein. While presently preferred embodiments have been described for purposes of this disclosure, numerous changes and modifications will be apparent to those of ordinary skill in the art. Such changes and modifications are encompassed within the spirit of this invention as defined by the claims.

**APPENDIX 1**

| Image # | Title |
|---|---|
| 1 | 200 Novacite Processed 1 |
| 2 | 200 Novacite Processed 2 |
| 3 | 200 Novacite Processed 3 |
| 4 | 200 Novacite Unprocessed 1 |
| 5 | 200 Novacite Unprocessed 2 |
| 6 | 200 Novacite Unprocessed 3 |
| 7 | Ash 1 |
| 8 | Ash 2 |
| 9 | Ash 3 |
| 10 | Hess Pumice Grade 2 Processed 1 |
| 11 | Hess Pumice Grade 2 Processed 2 |
| 12 | Hess Pumice Grade 2 Processed 3 |

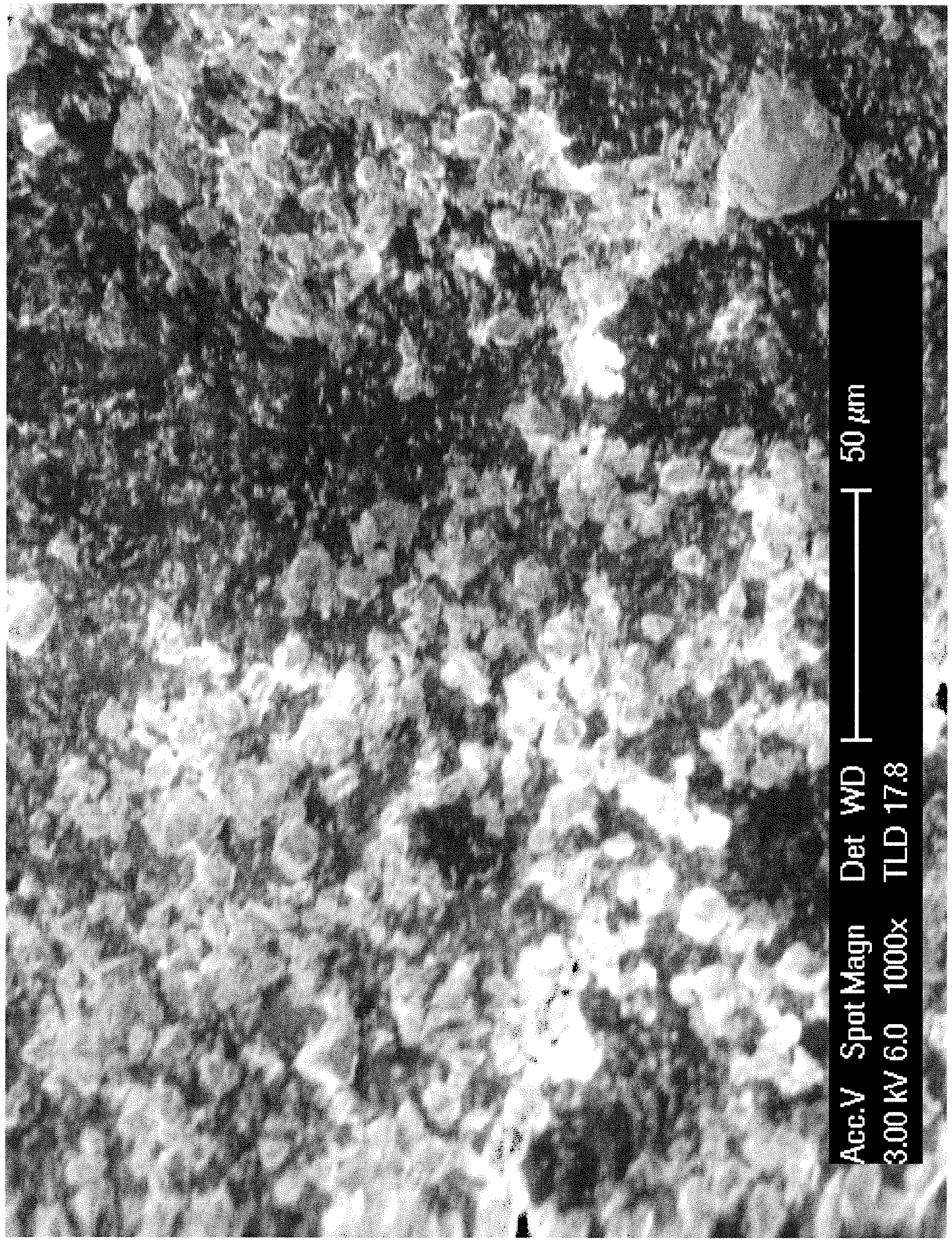

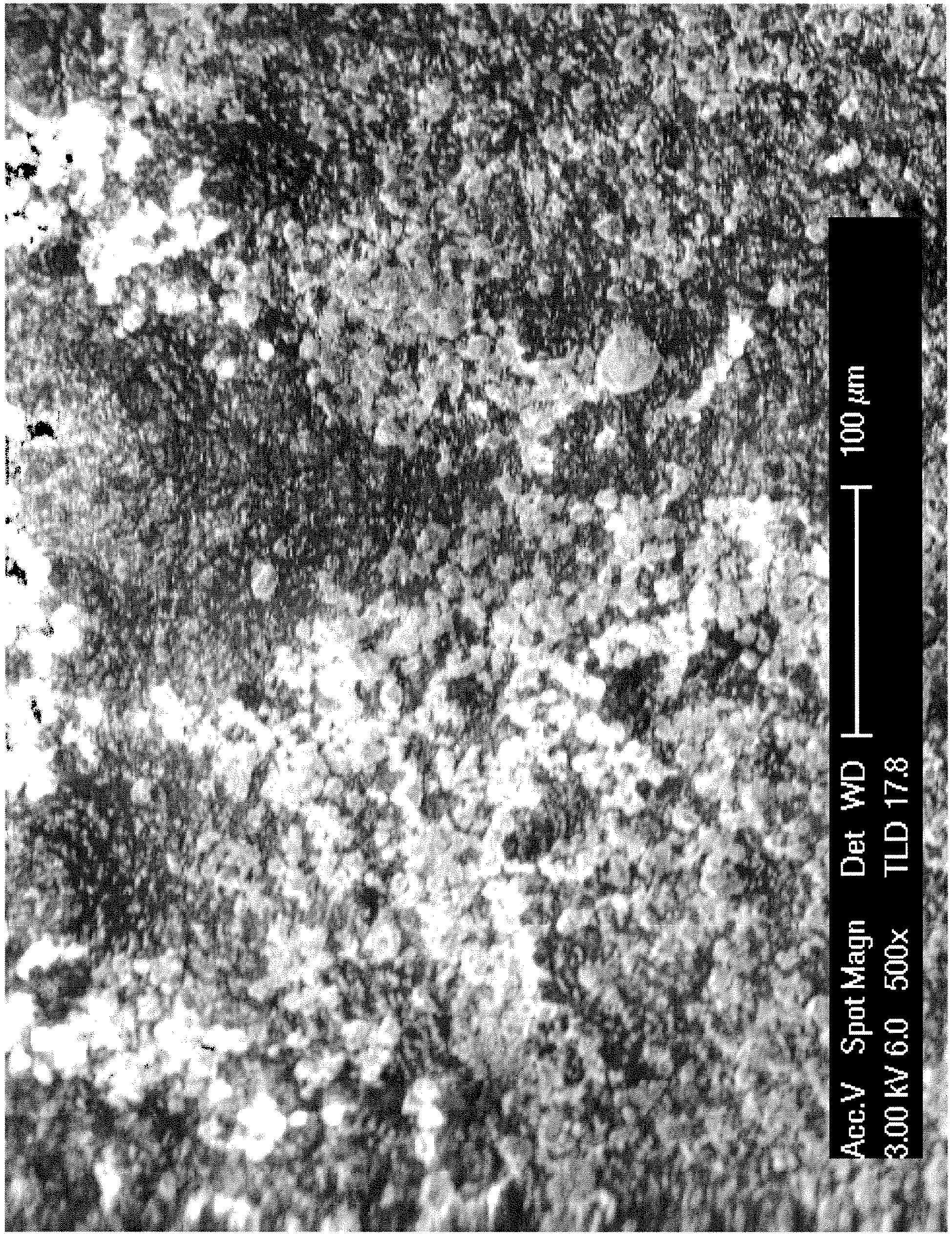

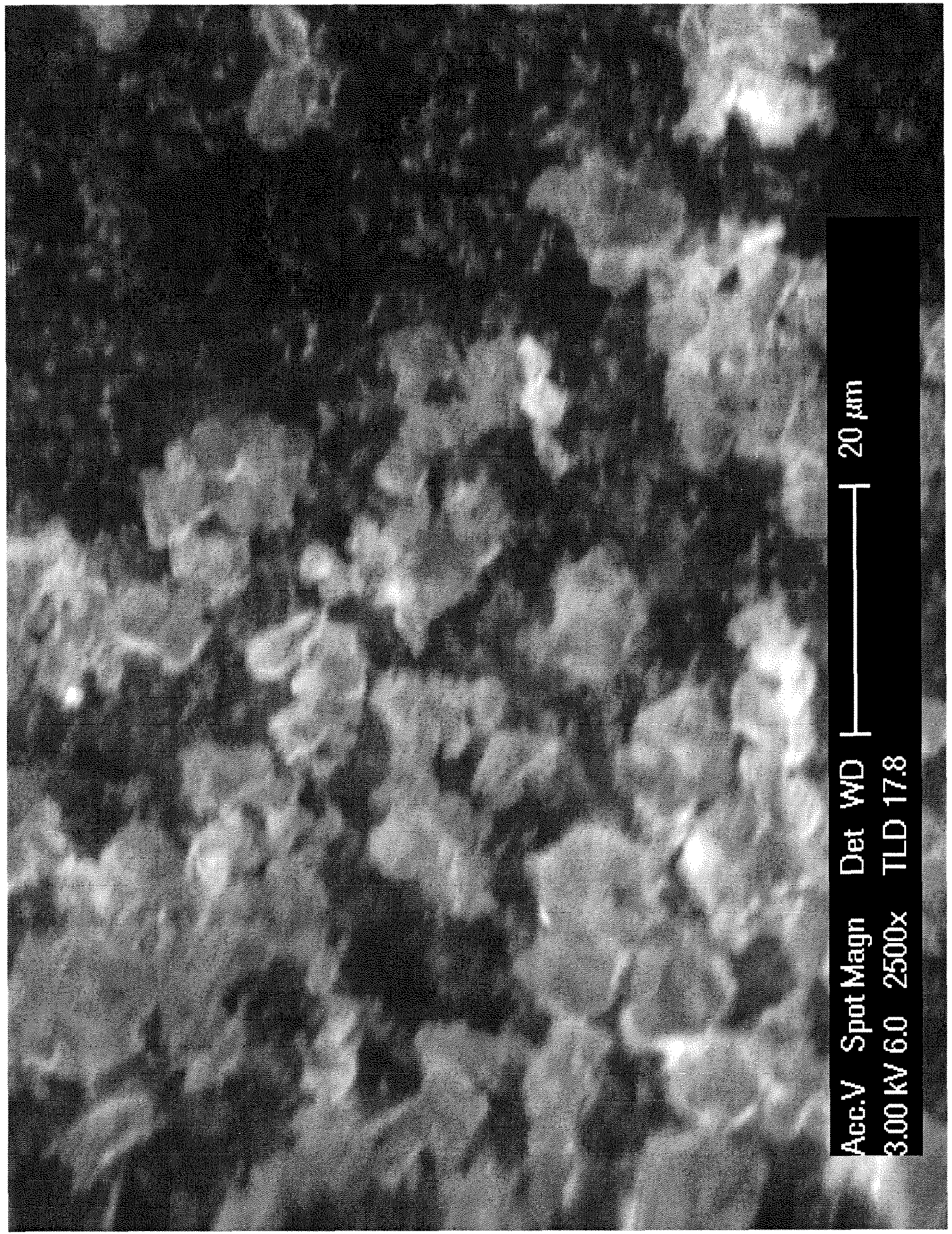

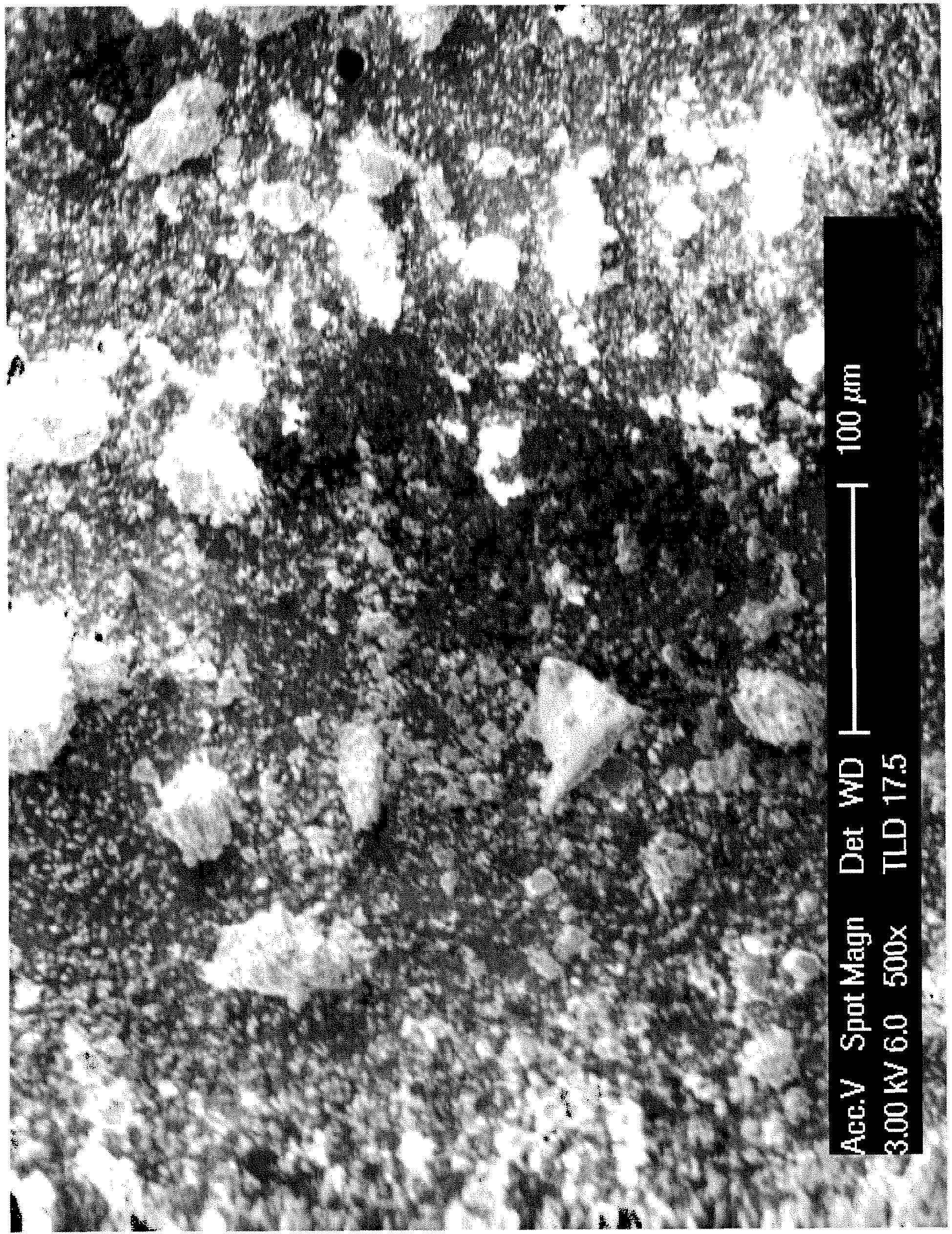

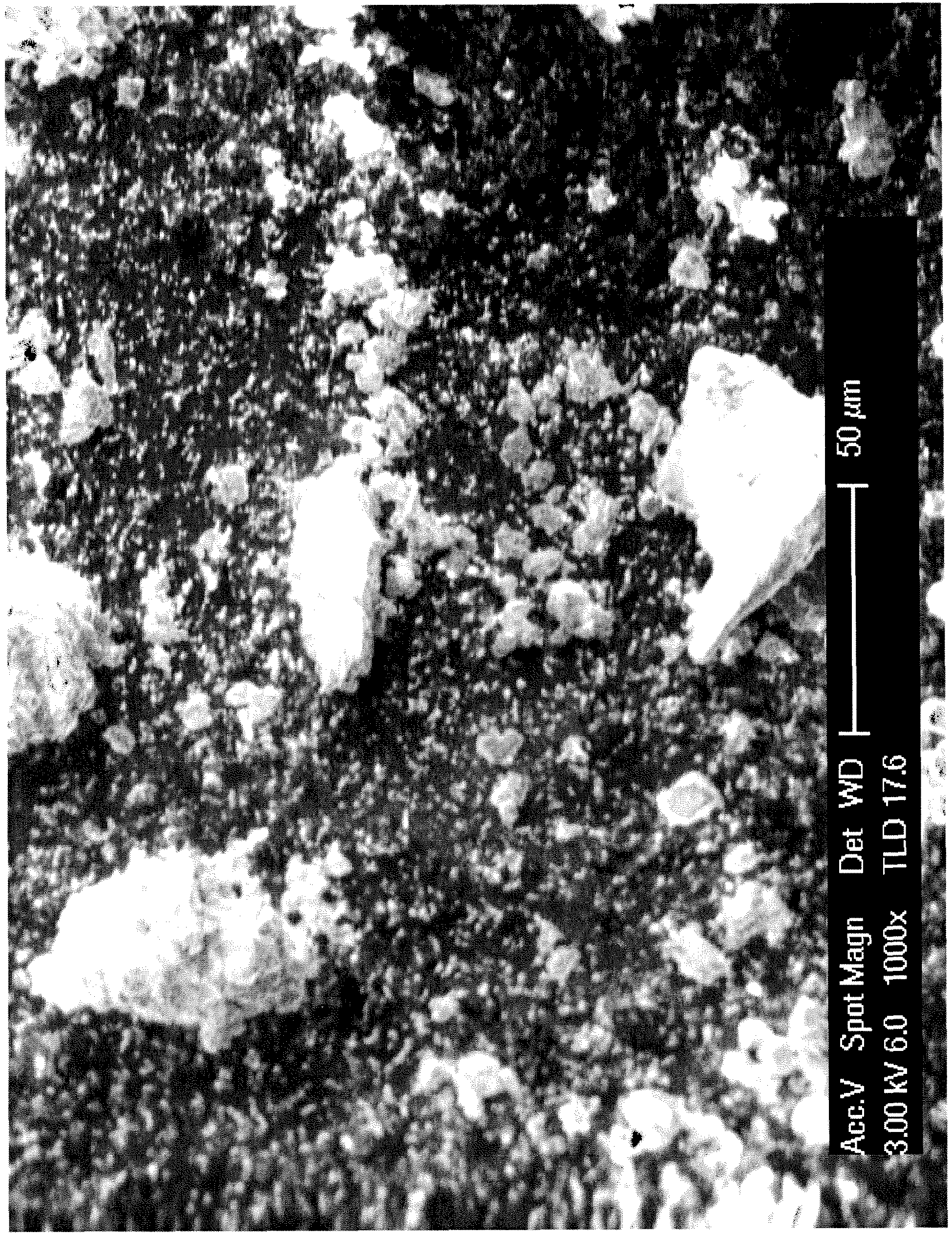

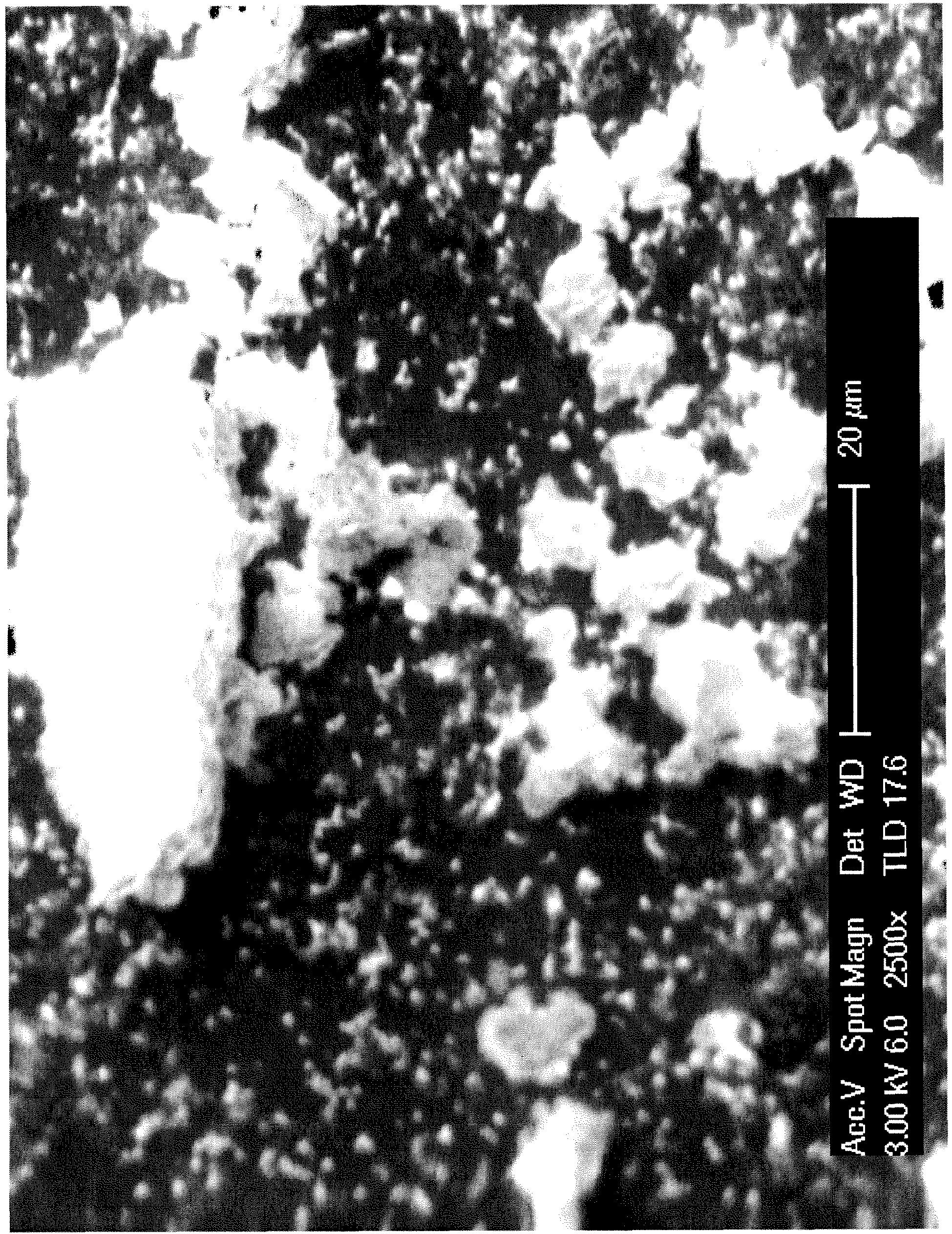

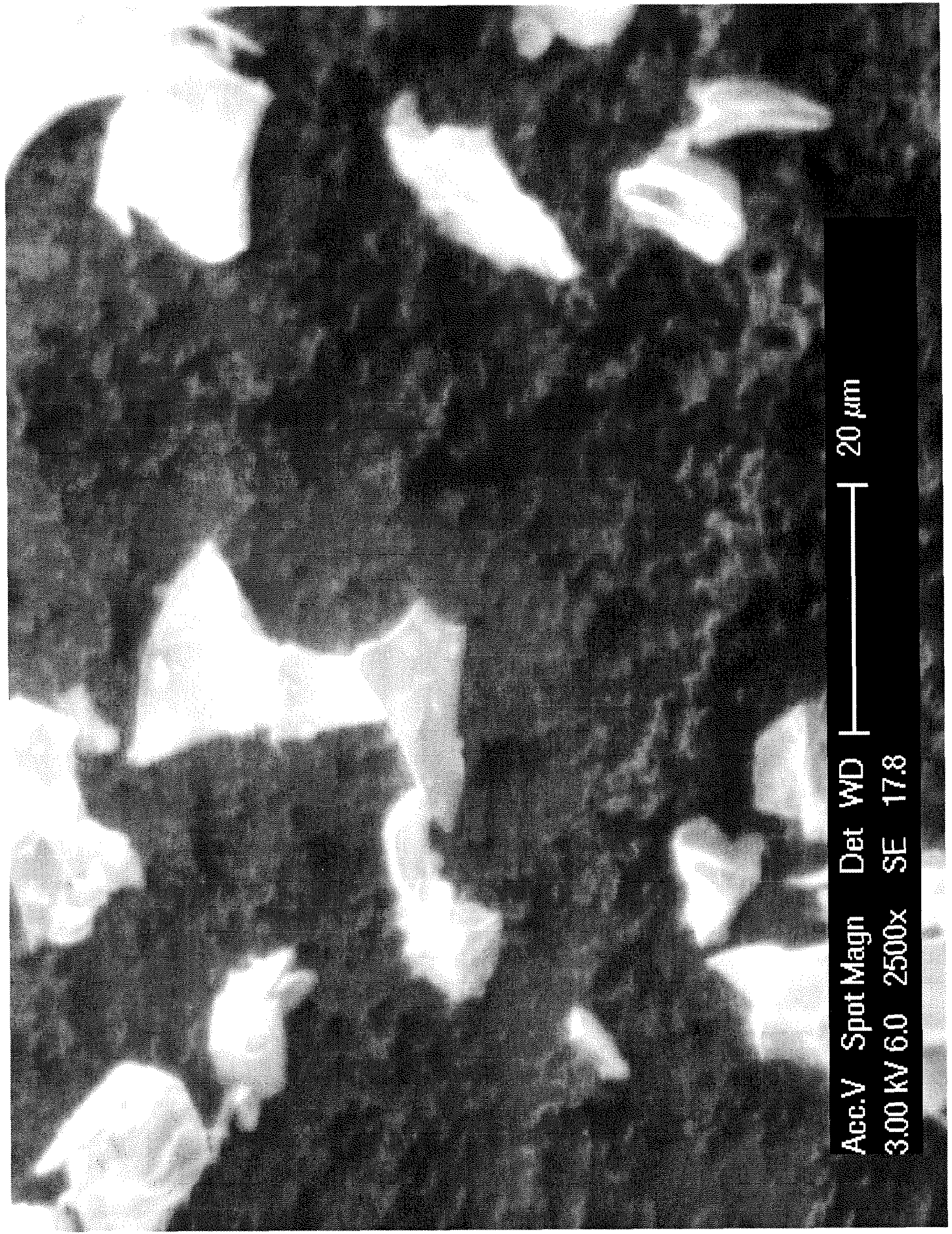

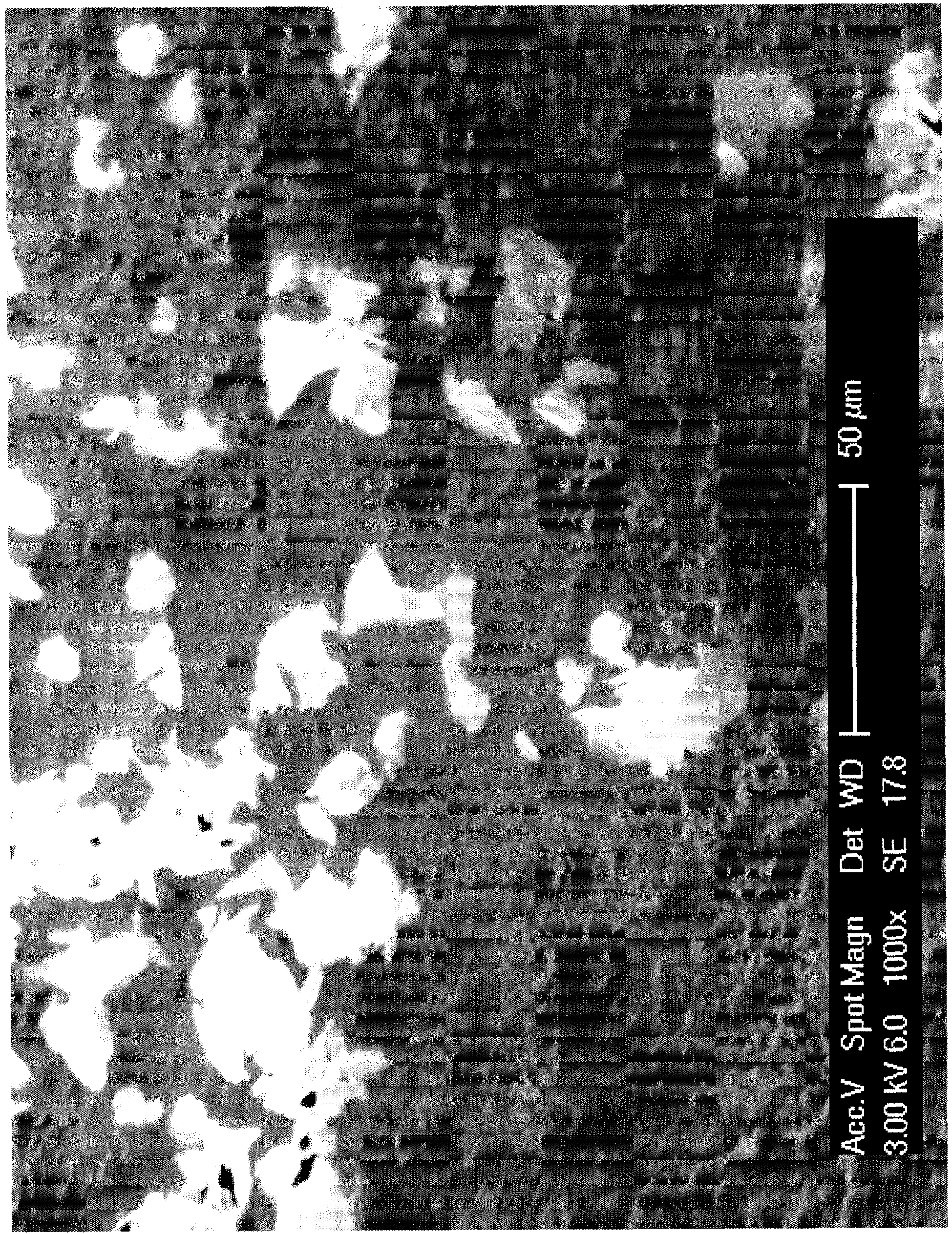

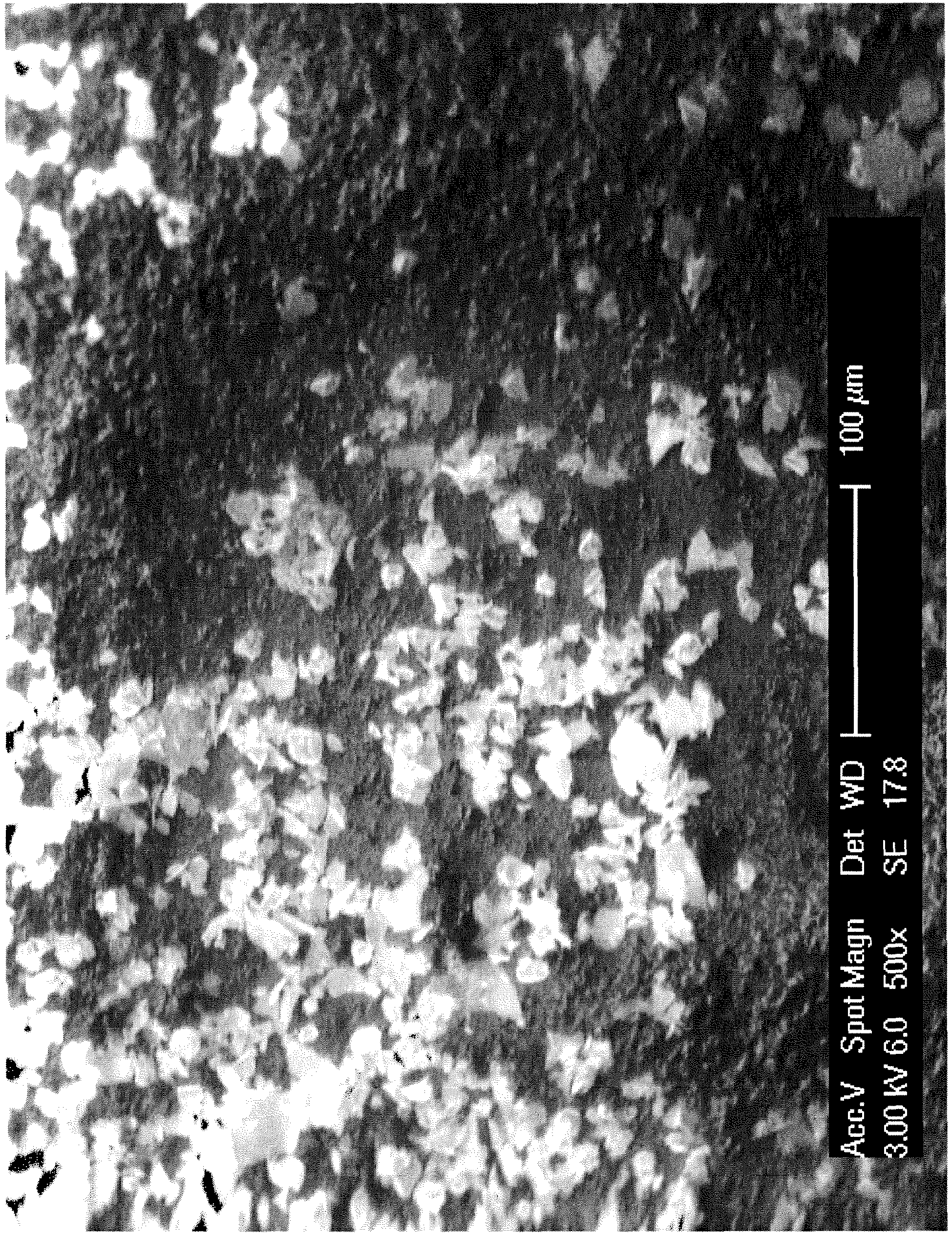

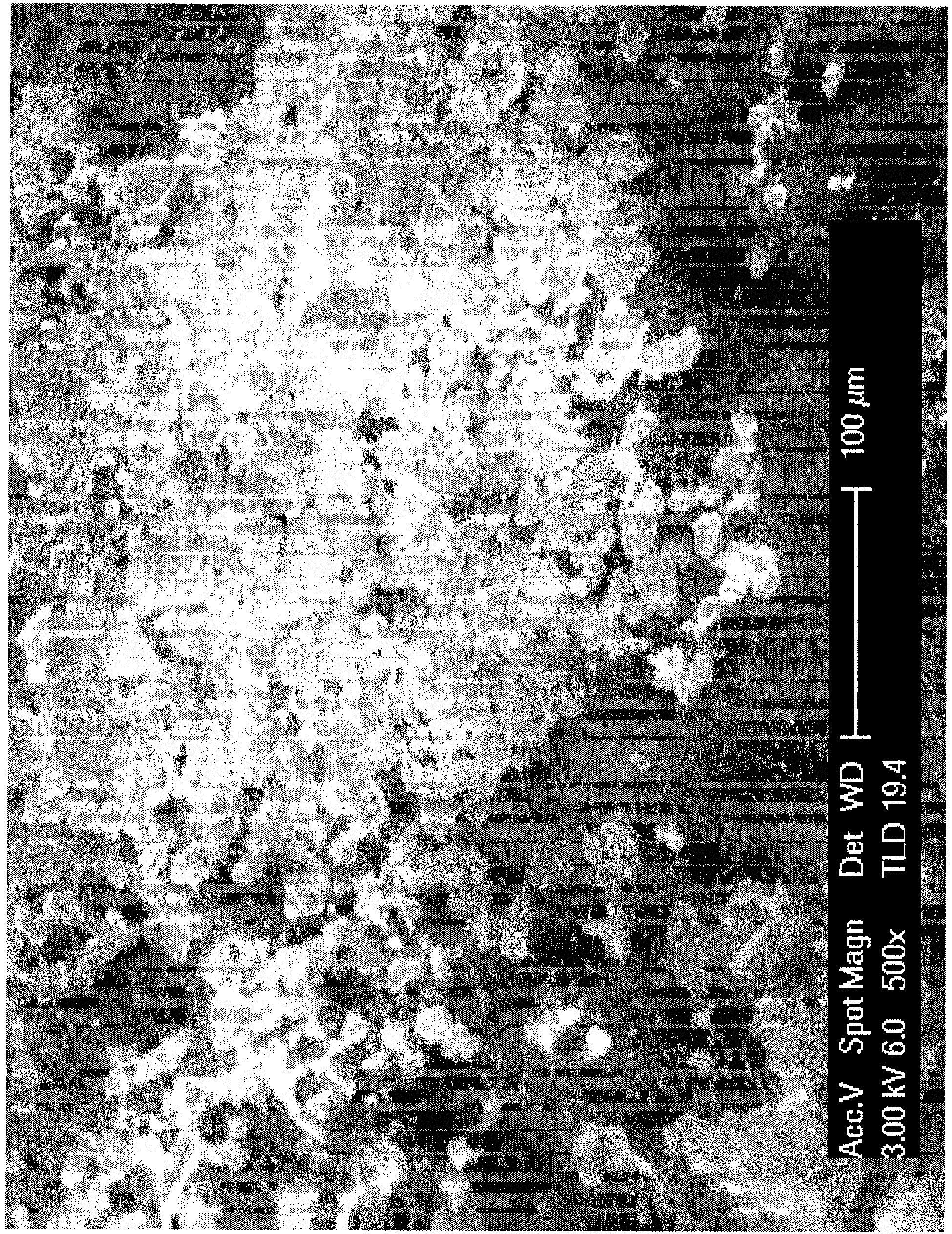

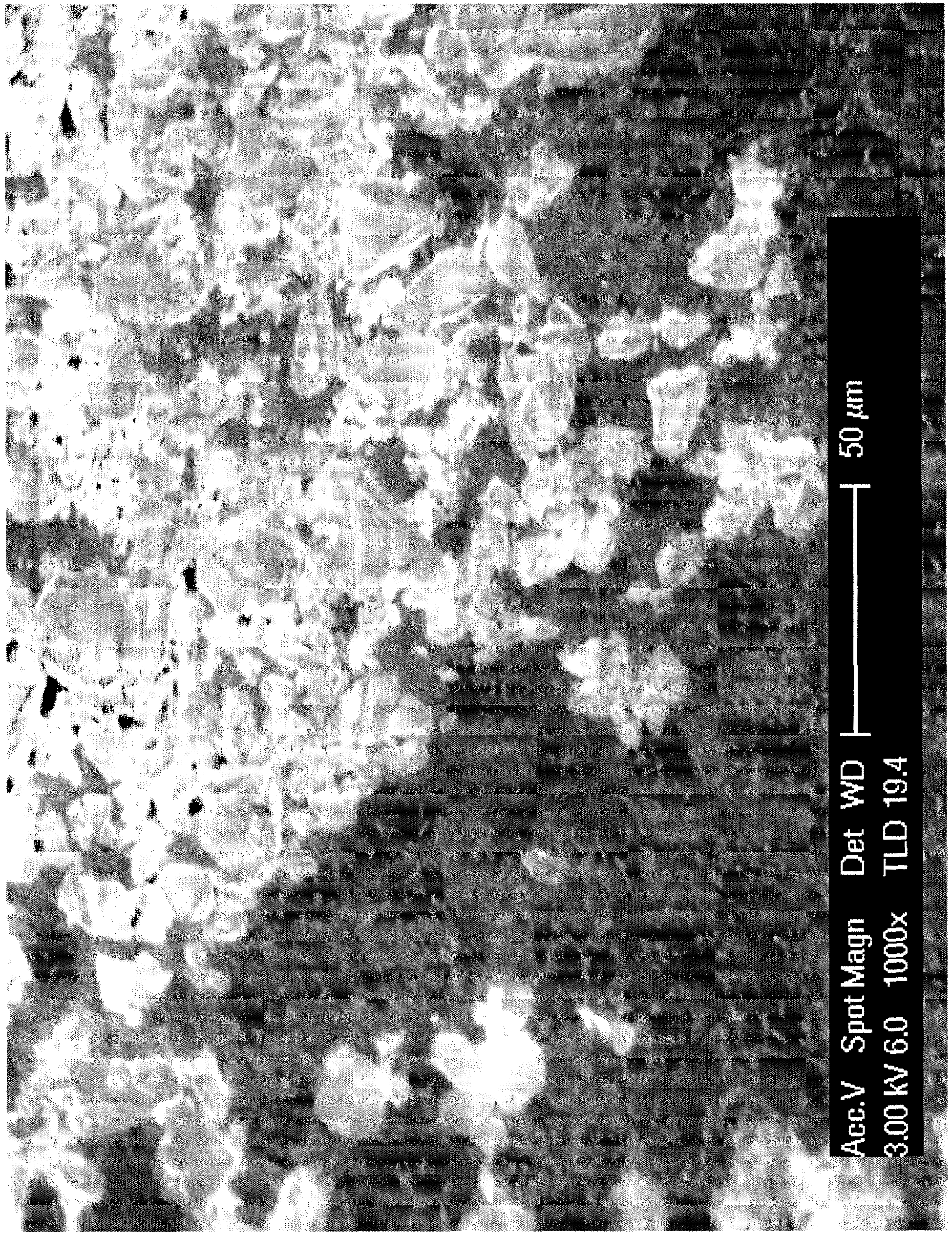

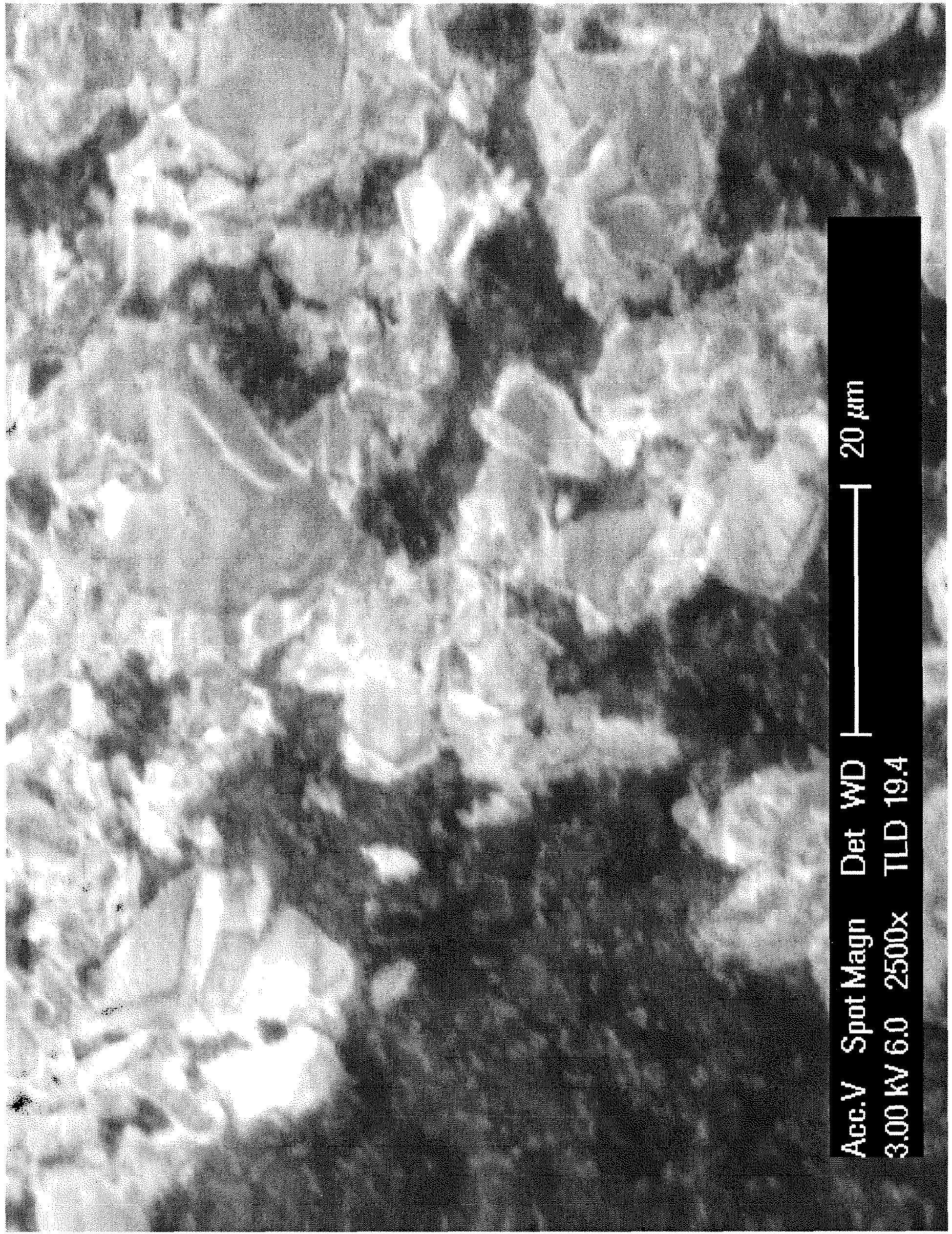

**APPENDIX 2**

| Image # | Title |
|---|---|
| 1 | Hess Pumice Grade 2 Unprocessed 2 |
| 2 | Hess Pumice Grade 2 Unprocessed 3 |
| 3 | Hess Pumice Grade 2 Unprocessed 4 |
| 4 | Kansas Mineral 1 |
| 5 | Kansas Mineral 2 |
| 6 | Kansas Mineral 3 |
| 7 | Pumice Grade 3 Processed 1 |
| 8 | Pumice Grade 3 Processed 2 |
| 9 | Pumice Grade 3 Processed 3 |
| 10 | Pumice Grade 3 Unprocessed 1 |
| 11 | Pumice Grade 3 Unprocessed 2 |
| 12 | Pumice Grade 3 Unprocessed 3 |
| 13 | Pumice Grade 3 Unprocessed 4 |
| 14 | Pumice Pearlite Fines 2 |
| 15 | Pumice Pearlite Fines 3 |
| 16 | Pumice Pearlite Fines Run 1-2 |
| 17 | Pumice Pearlite Fines Run 1-3 |

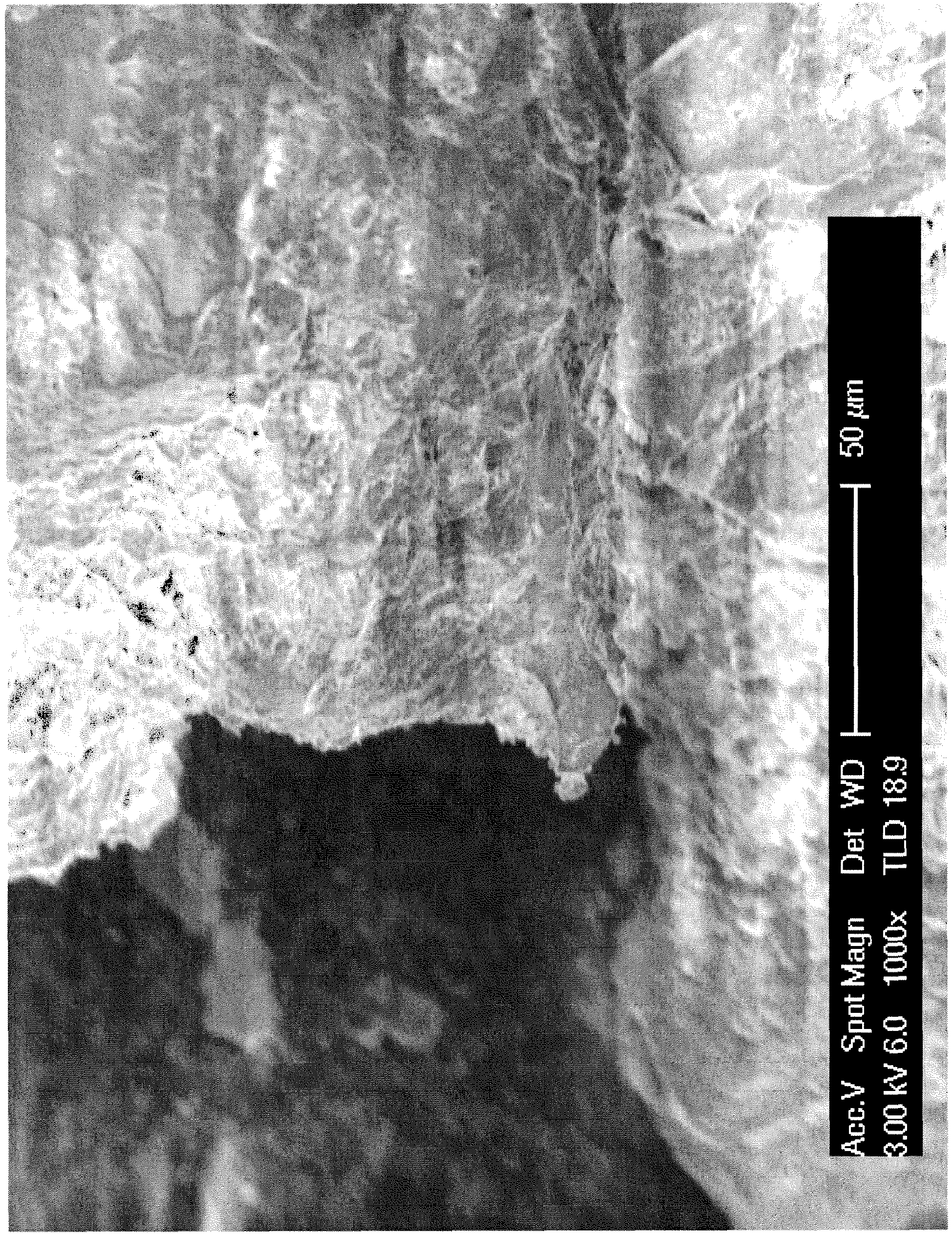

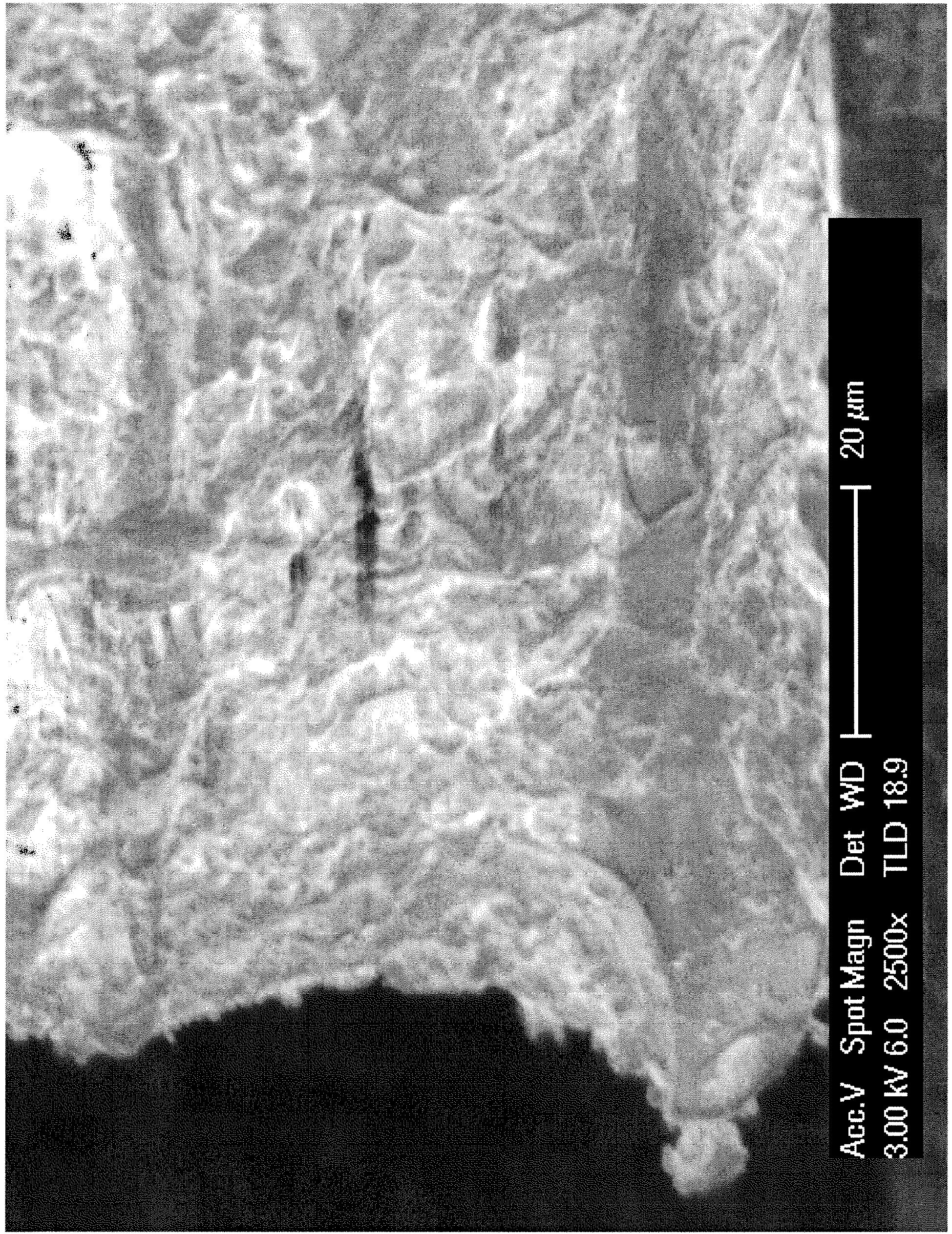

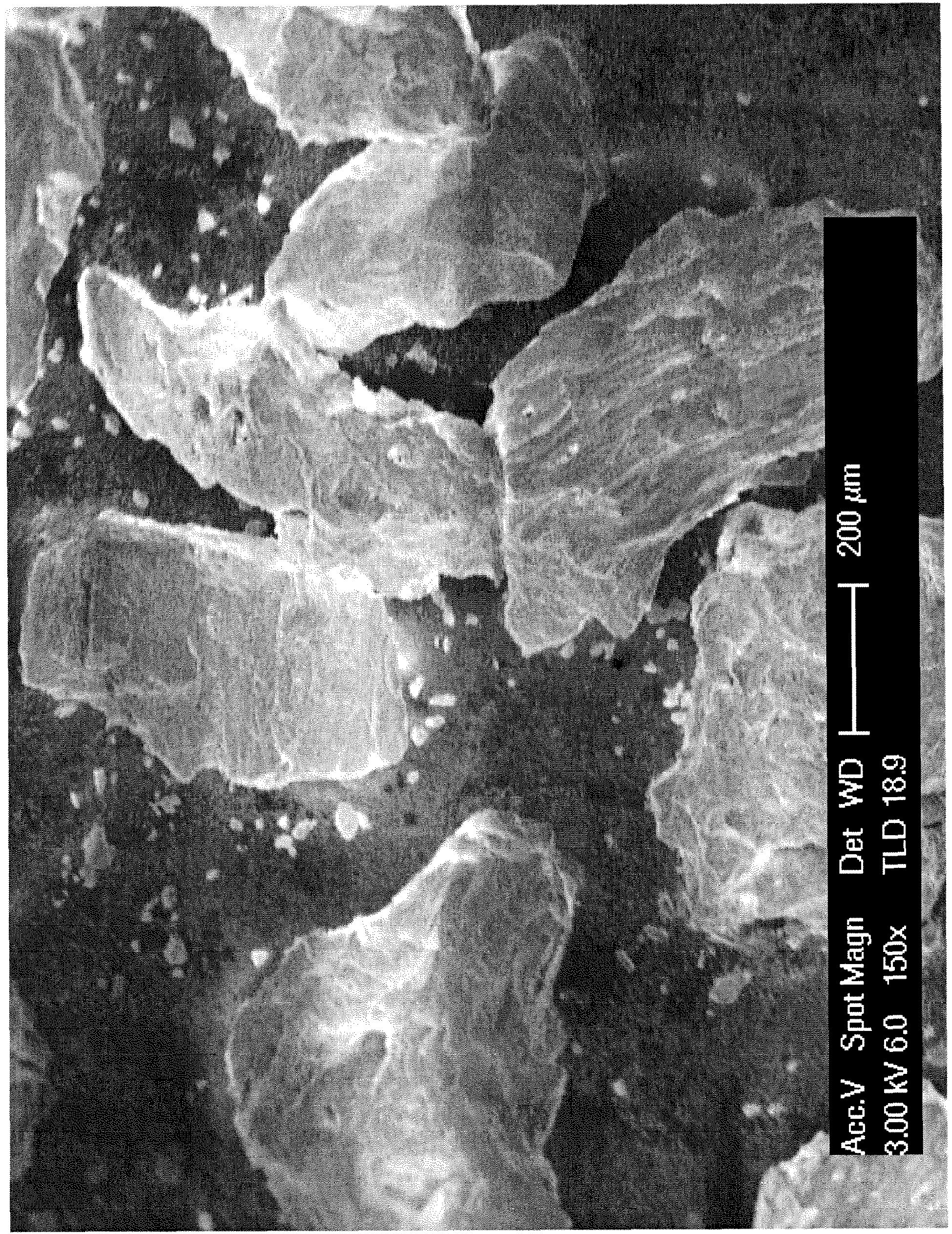

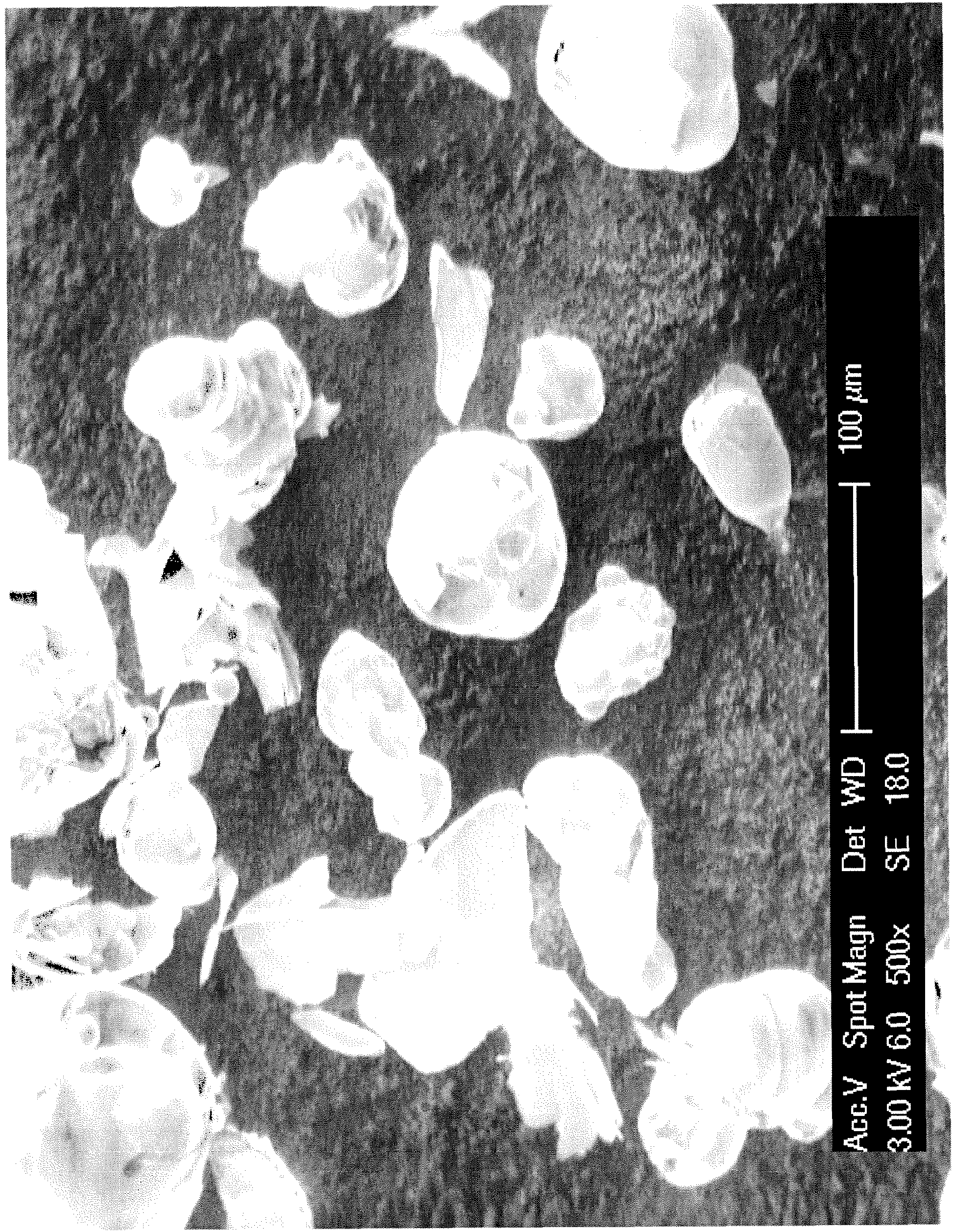

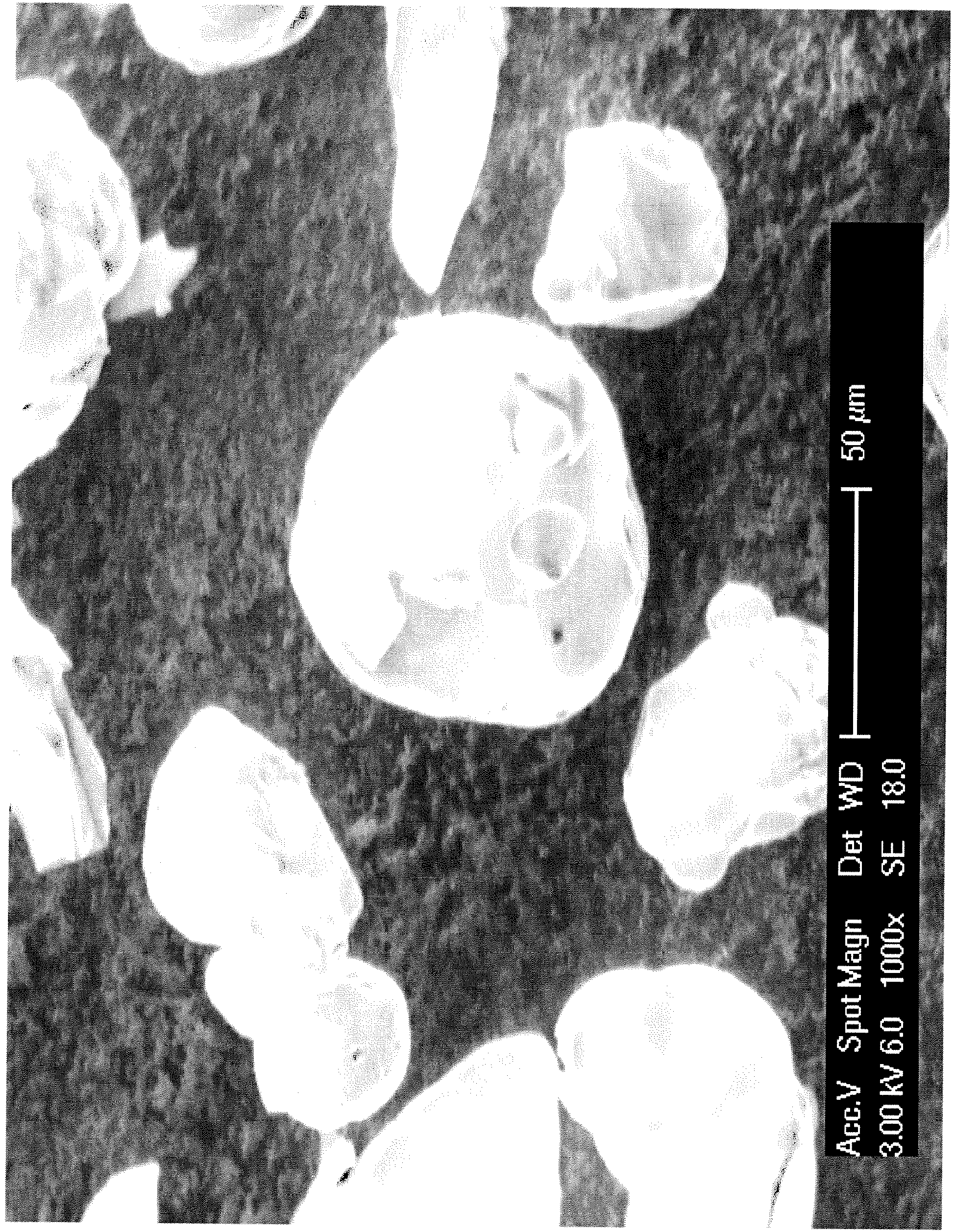

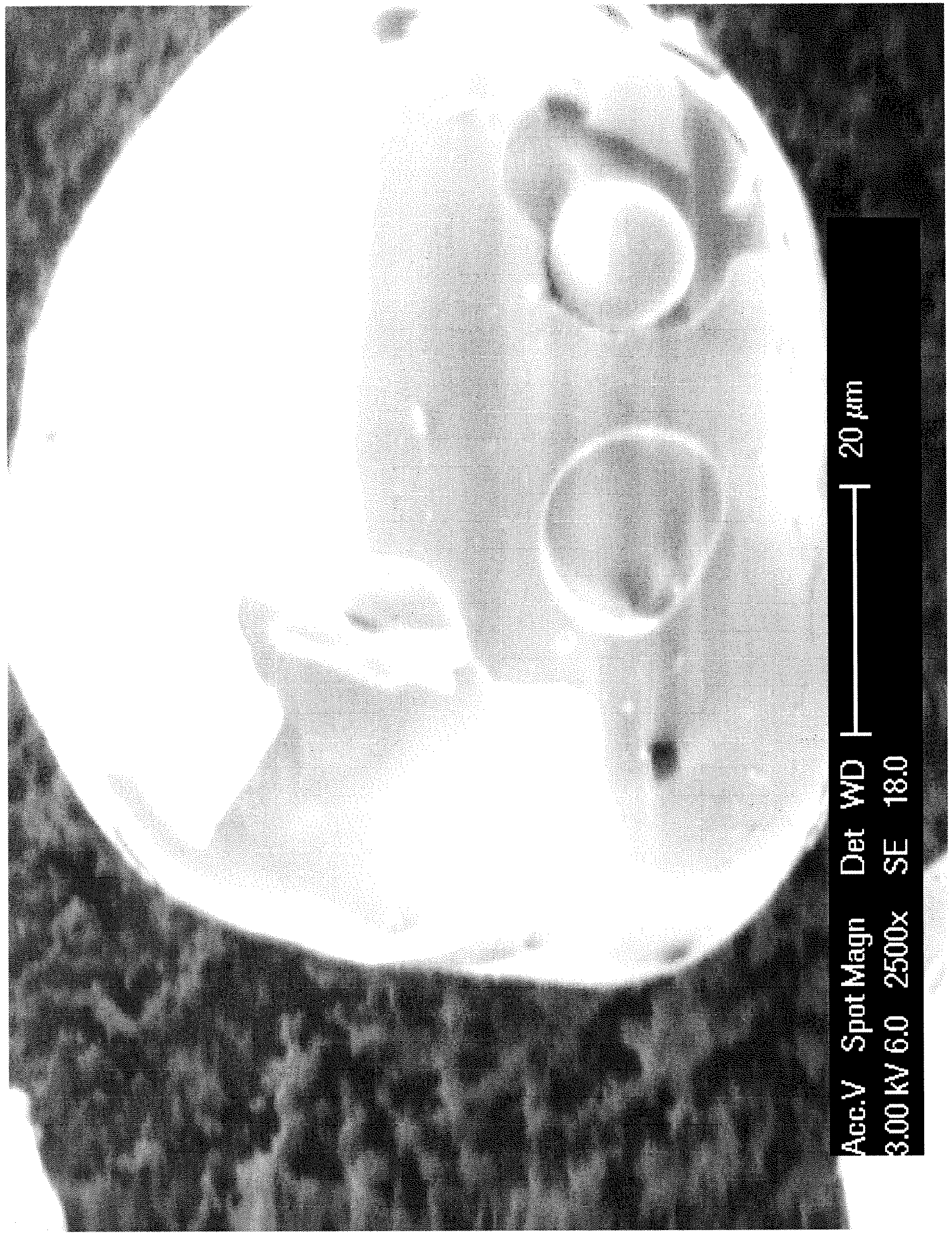

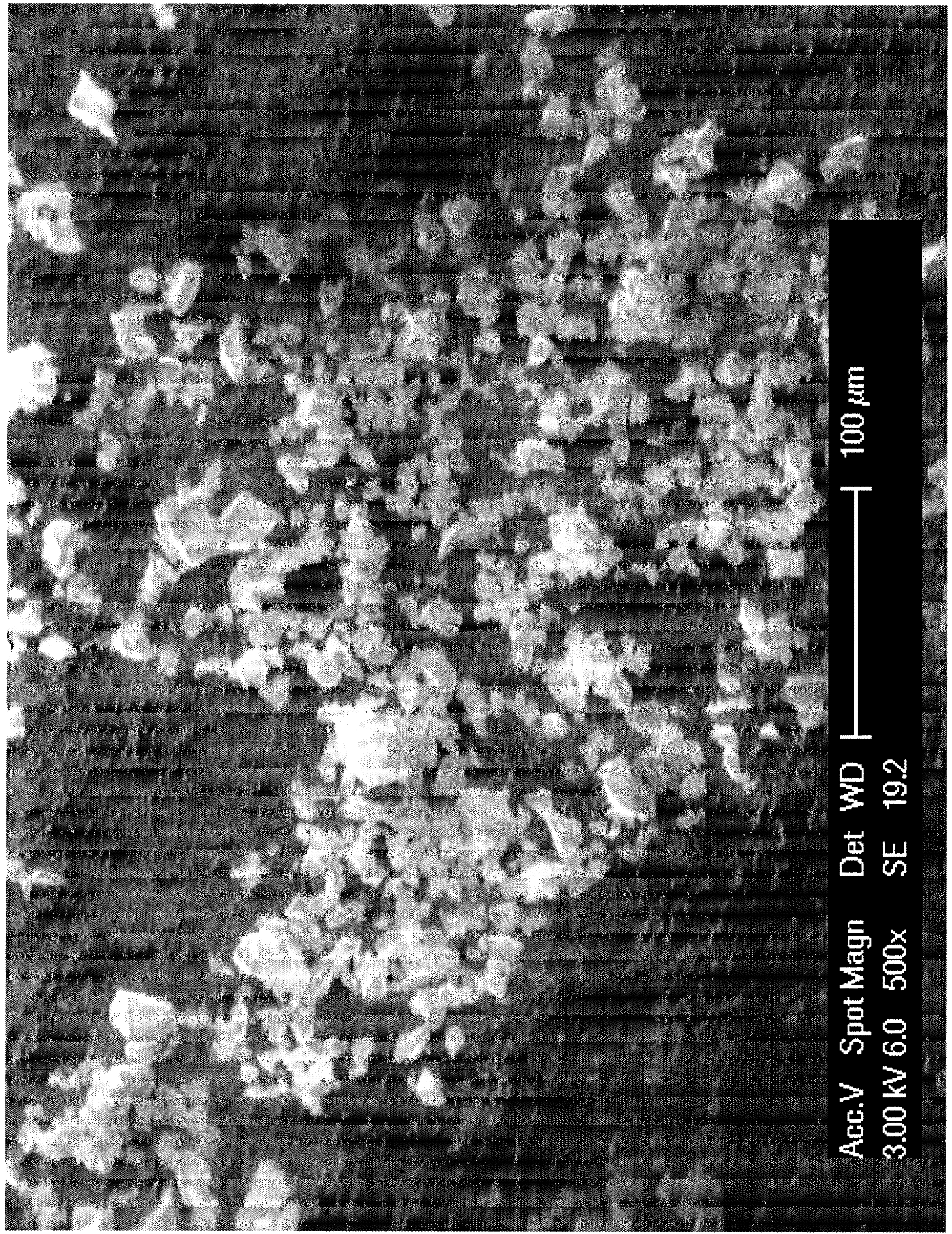

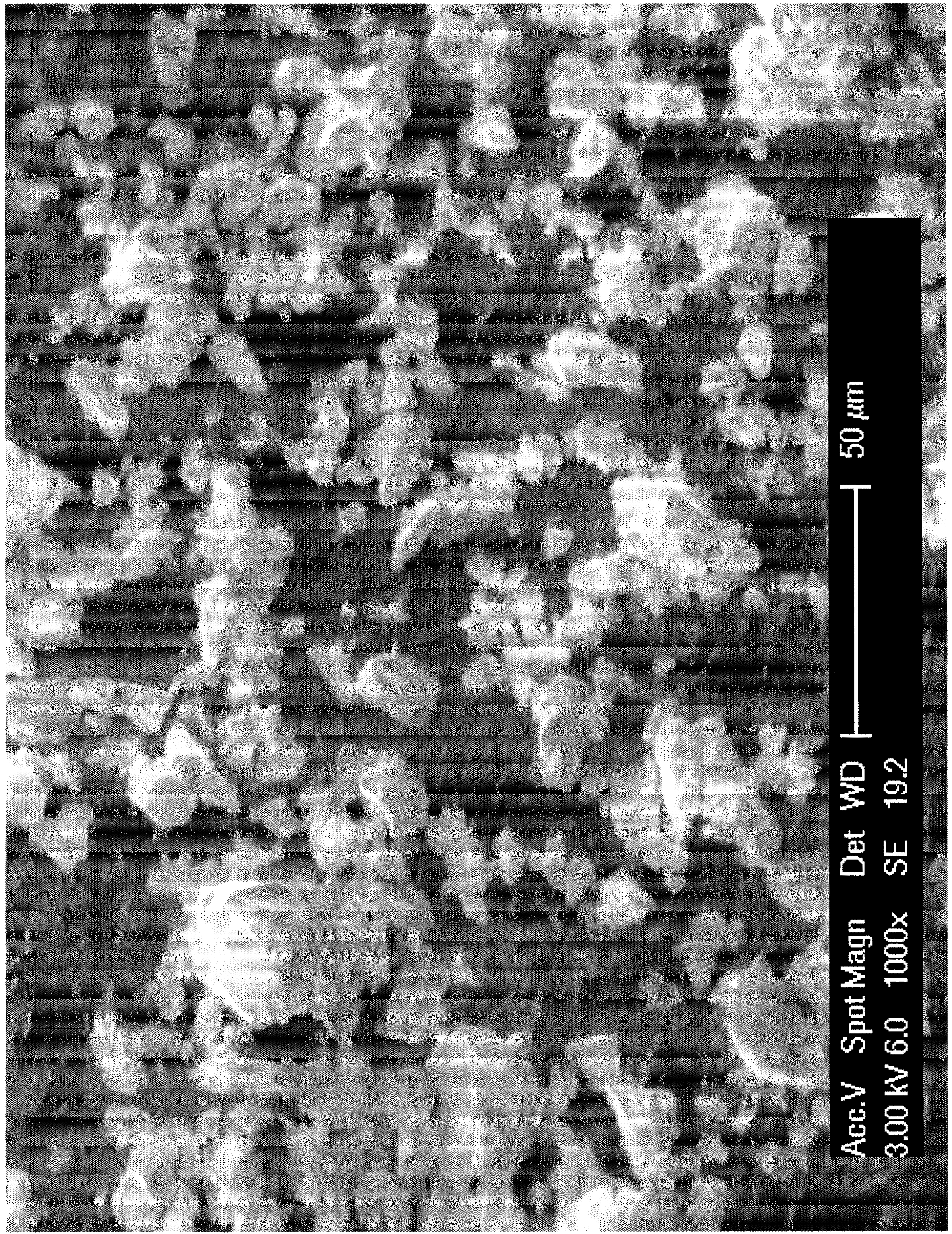

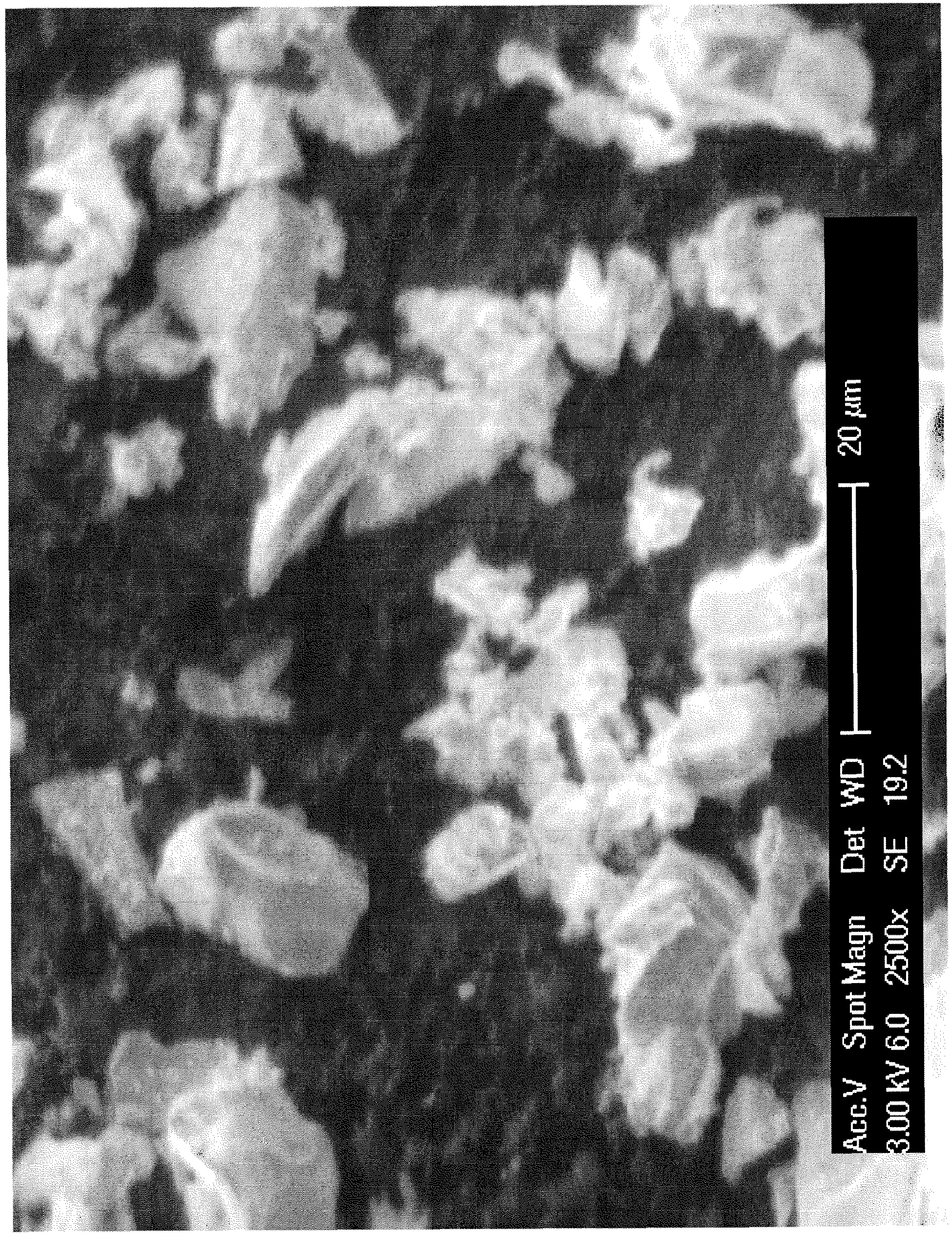

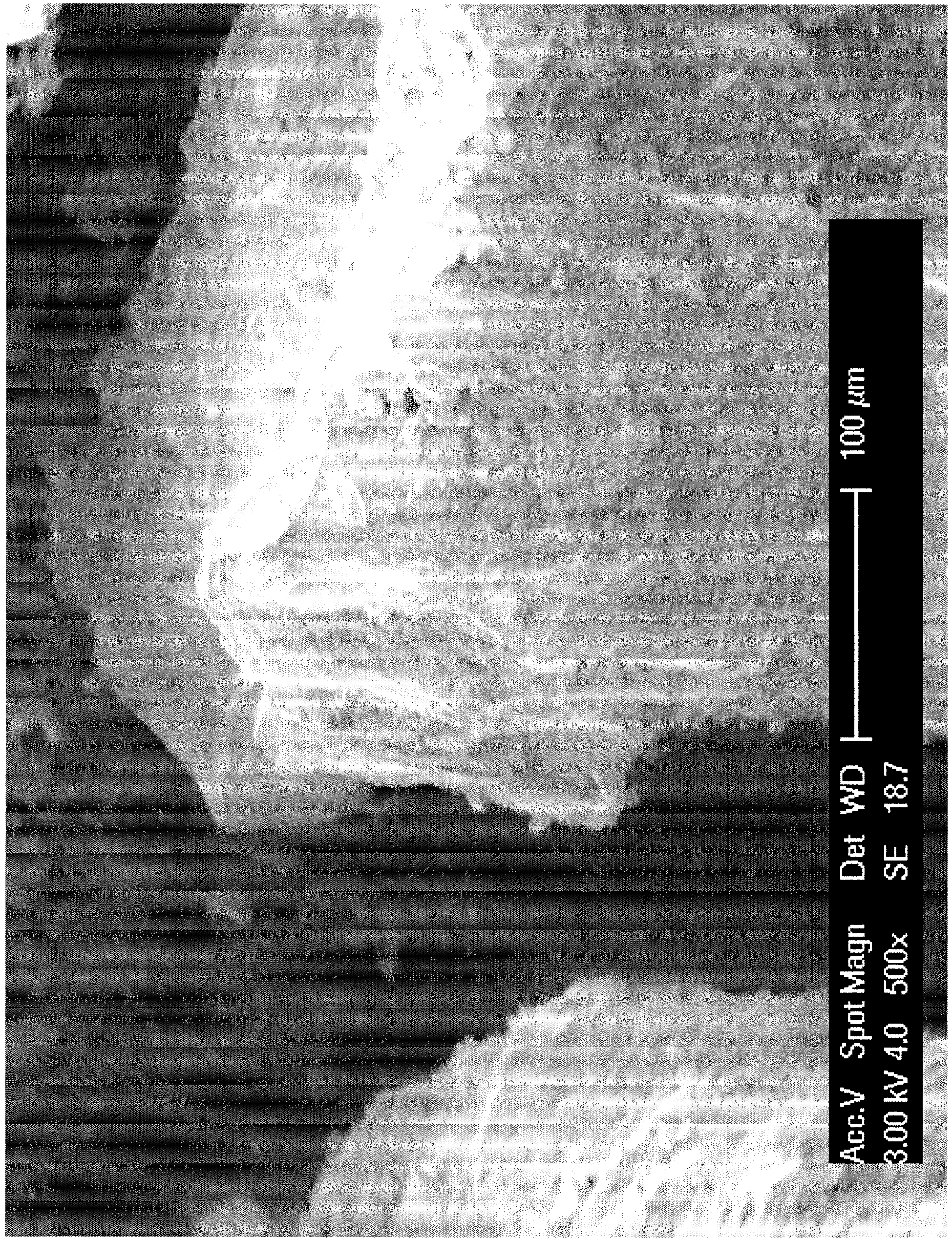

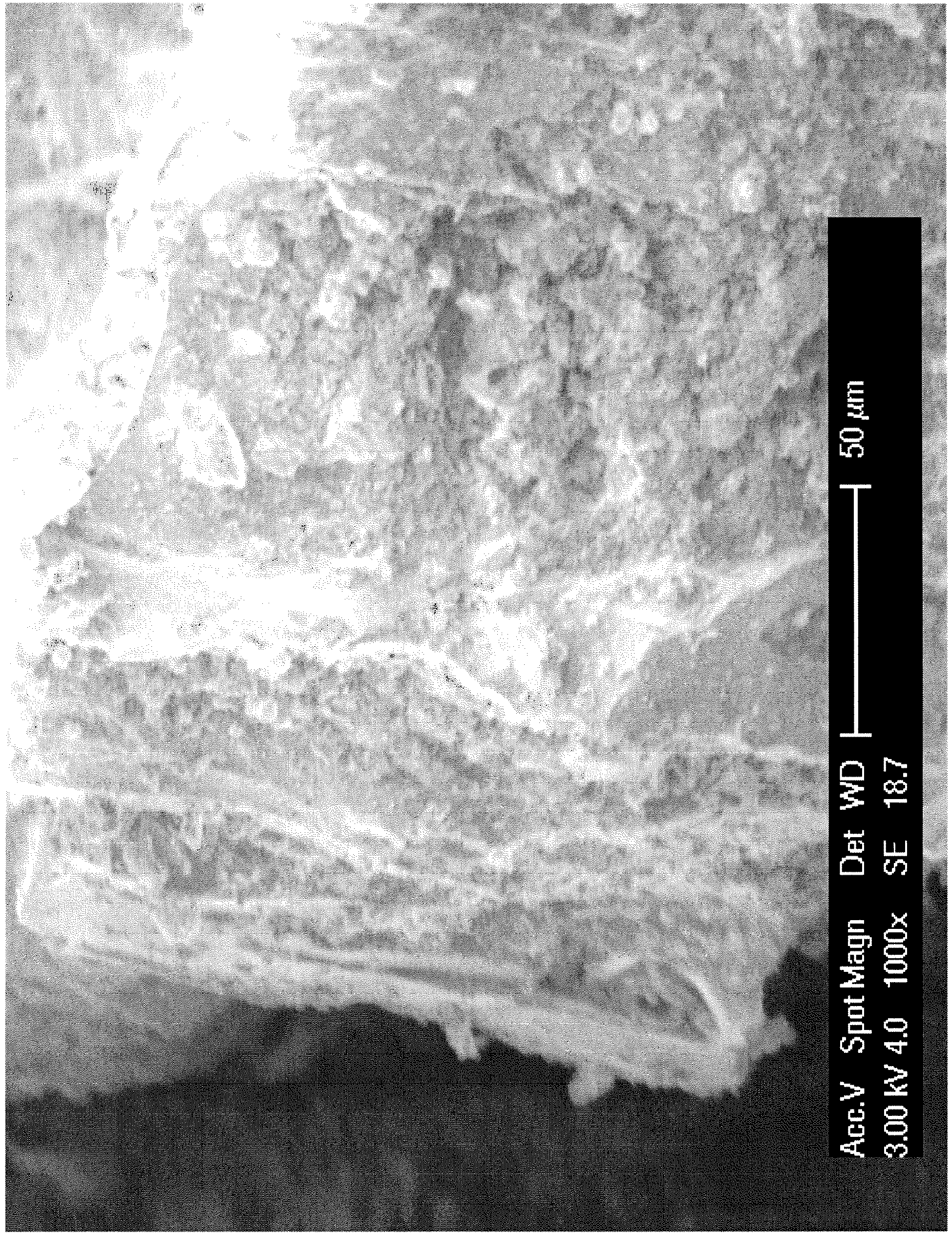

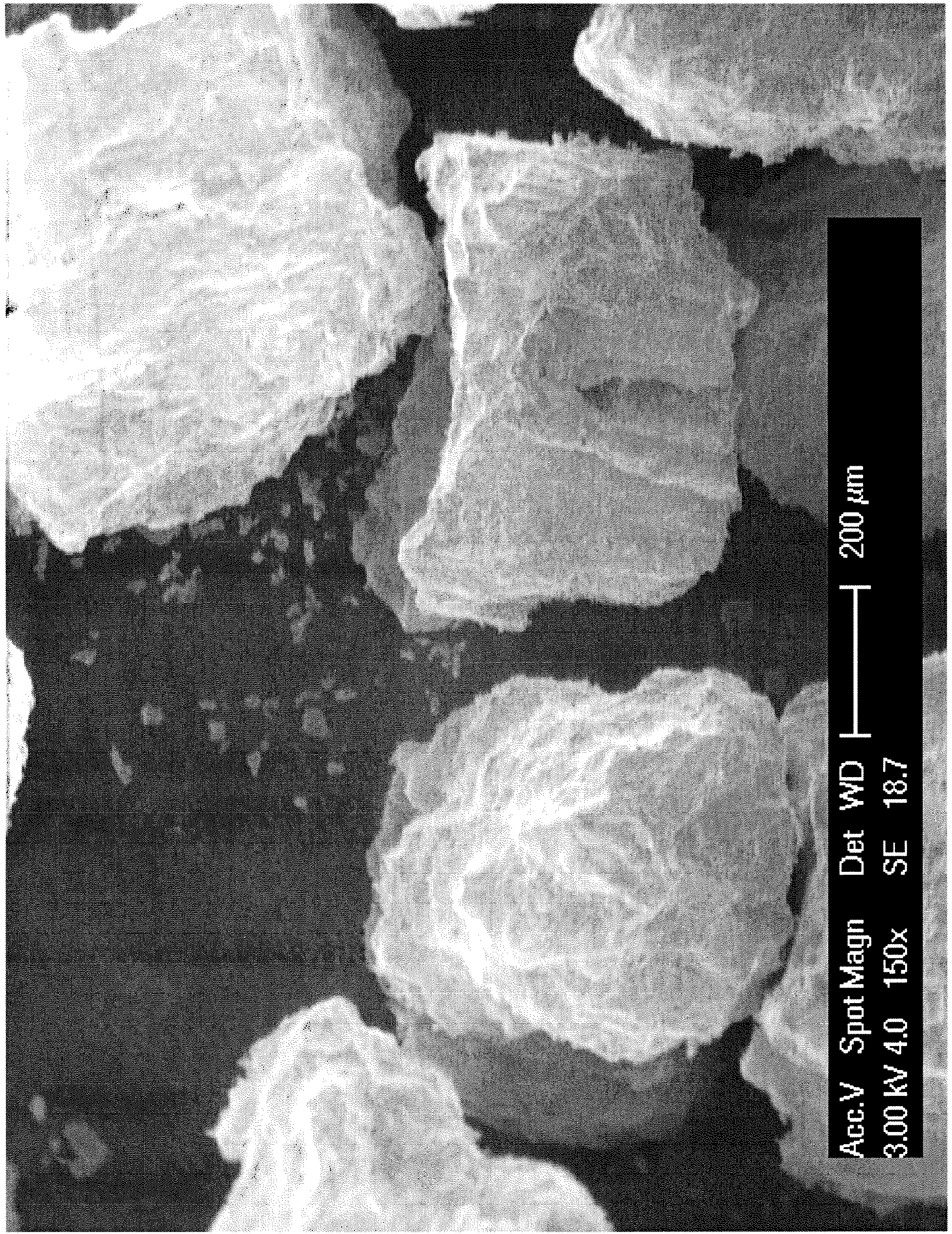

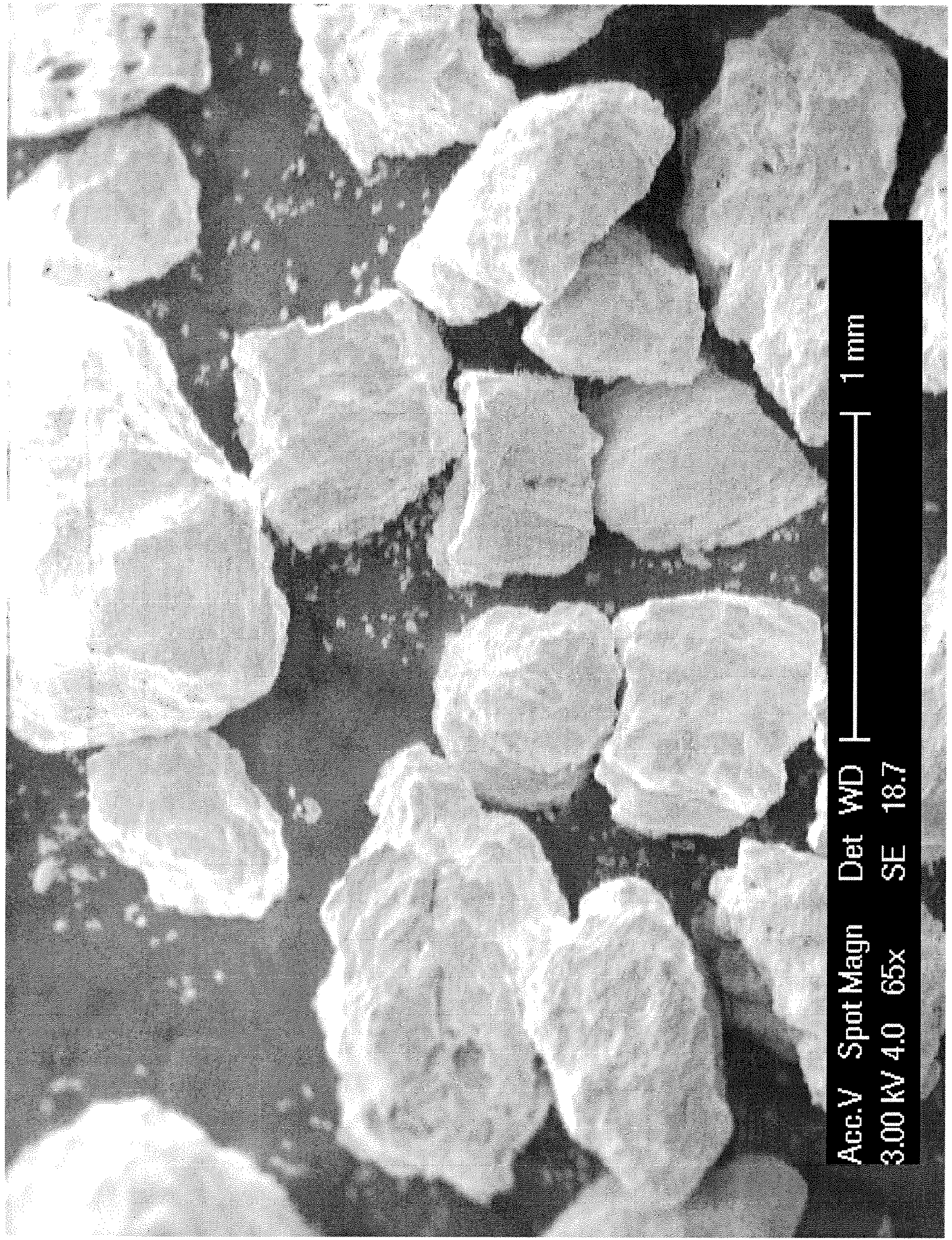

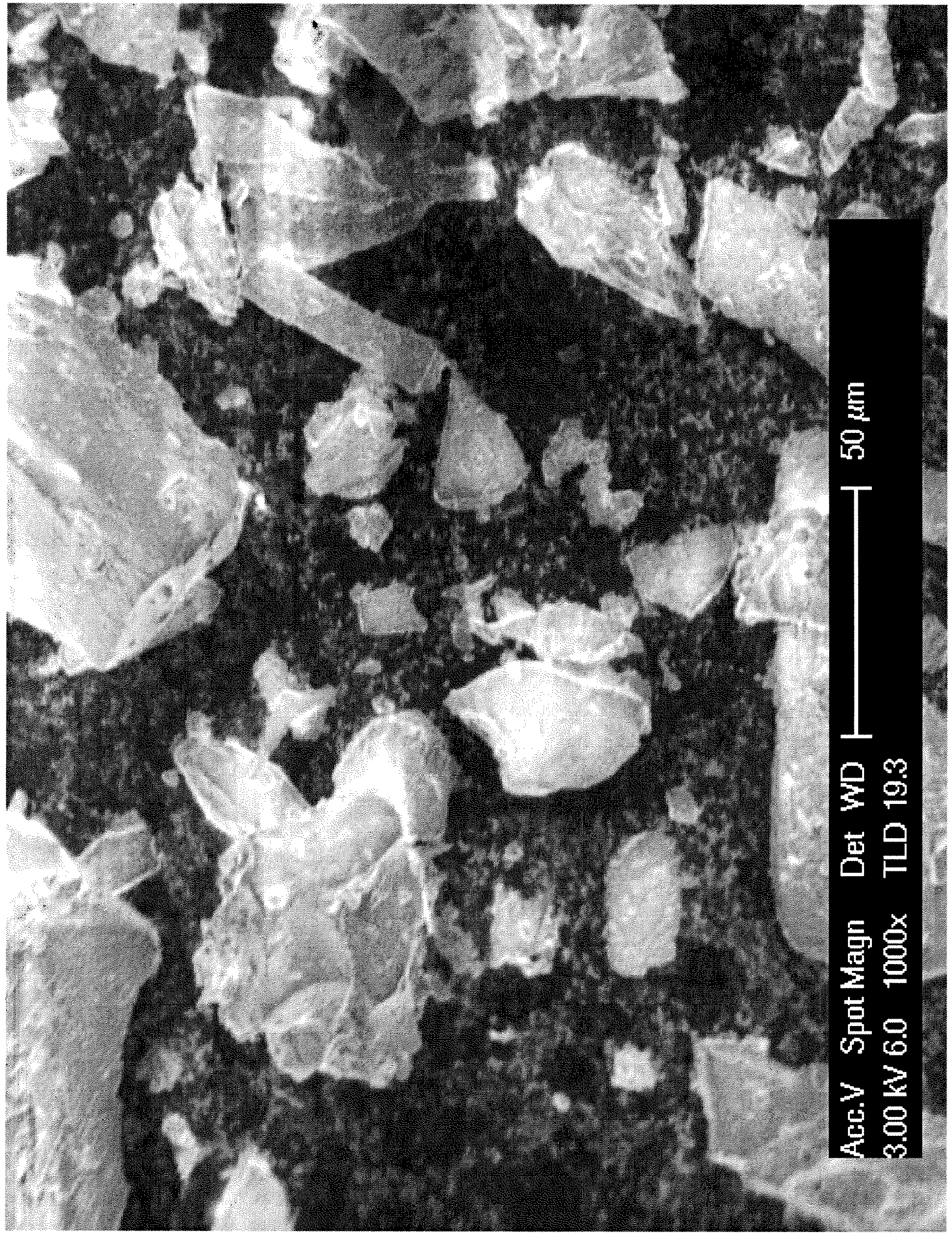

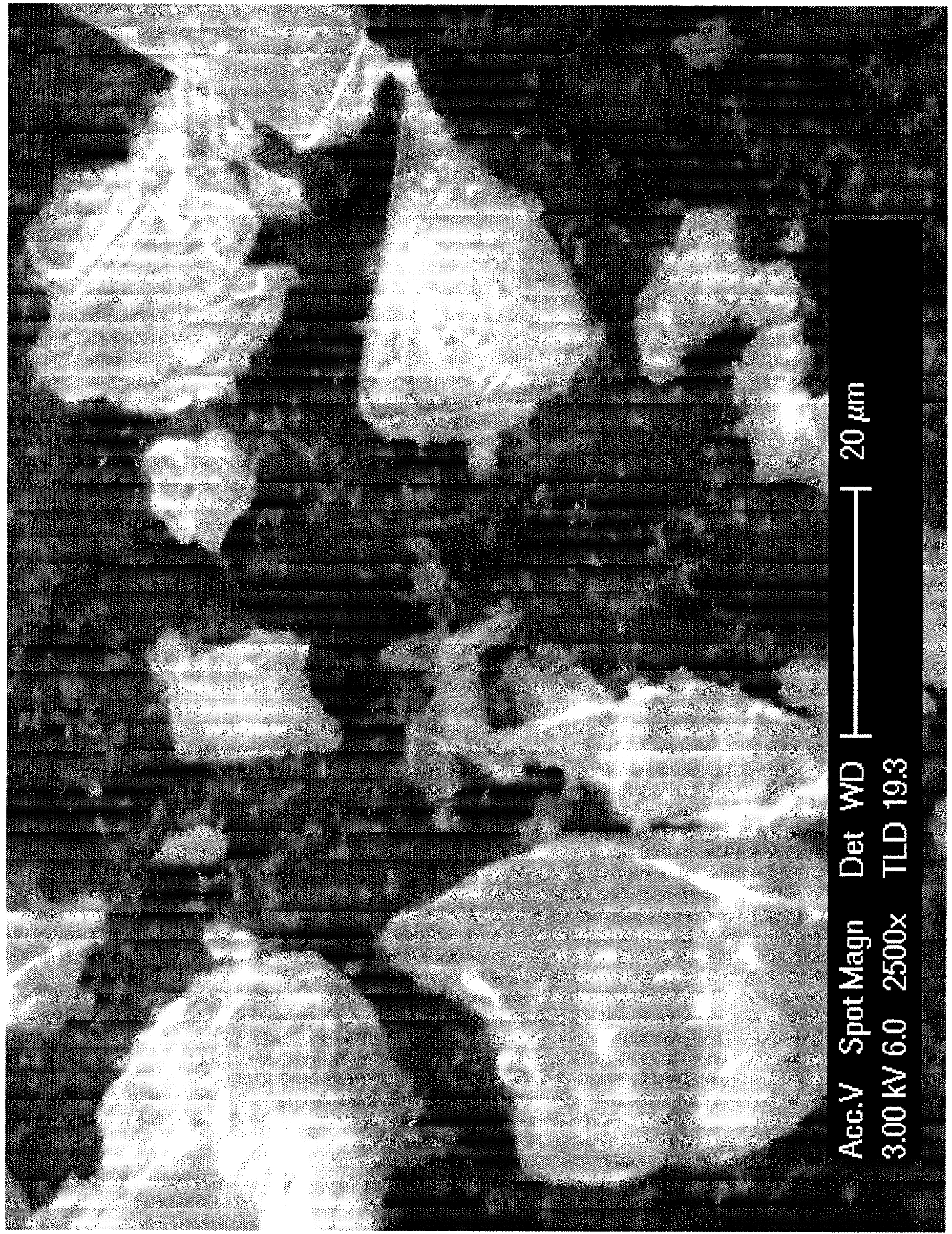

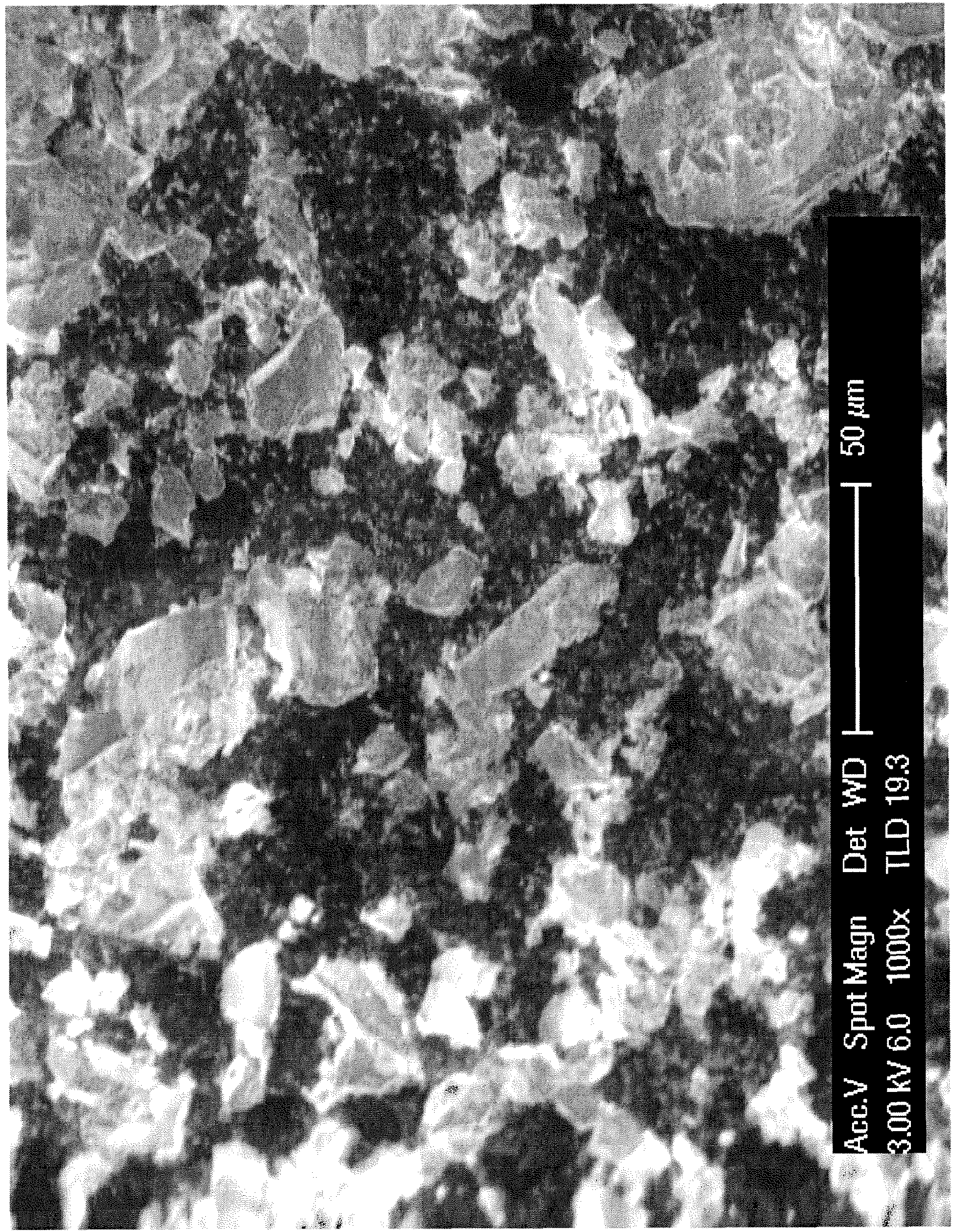

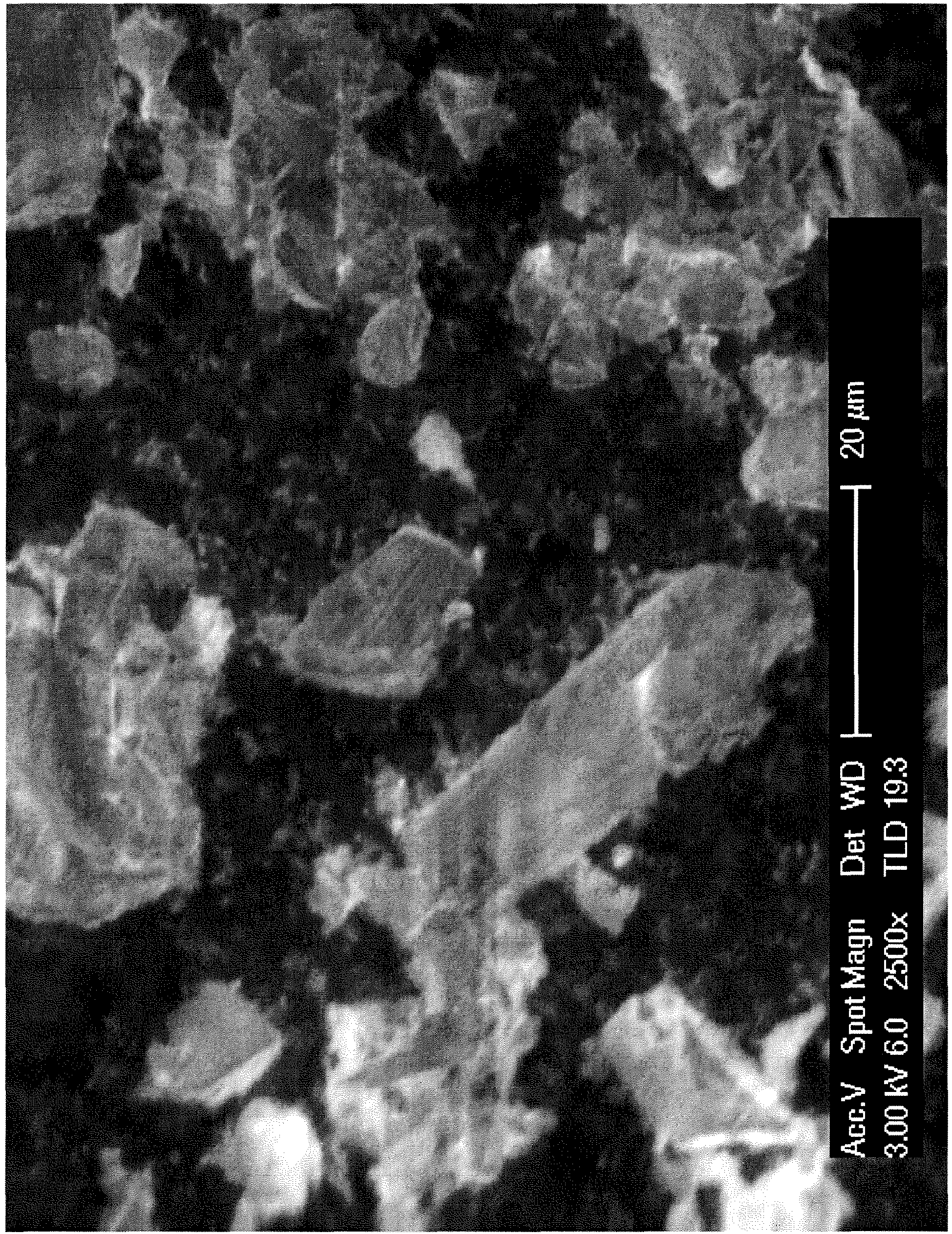

**APPENDIX 3**

| Image # | Title |
|---|---|
| 1 | Pumice Pearlite Fines 1 |
| 2 | Pumice Pearlite Fines Run 1-1 |
| 3 | Silbro 27.M 1 |
| 4 | Silbro 27.M 2 |
| 5 | Silbro 27.M 3 |
| 6 | Strategic Material 1 |
| 7 | Strategic Material 2 |
| 8 | Strategic Material 3 |
| 9 | Strategic Material 4 |
| 10 | Strategic Material Run 5 3 |
| 11 | Strategic Material Run 5 1 |
| 12 | Strategic Material Run 5 2 |
| 13 | White Rock 1 |
| 14 | White Rock 2 |
| 15 | White Rock 3 |

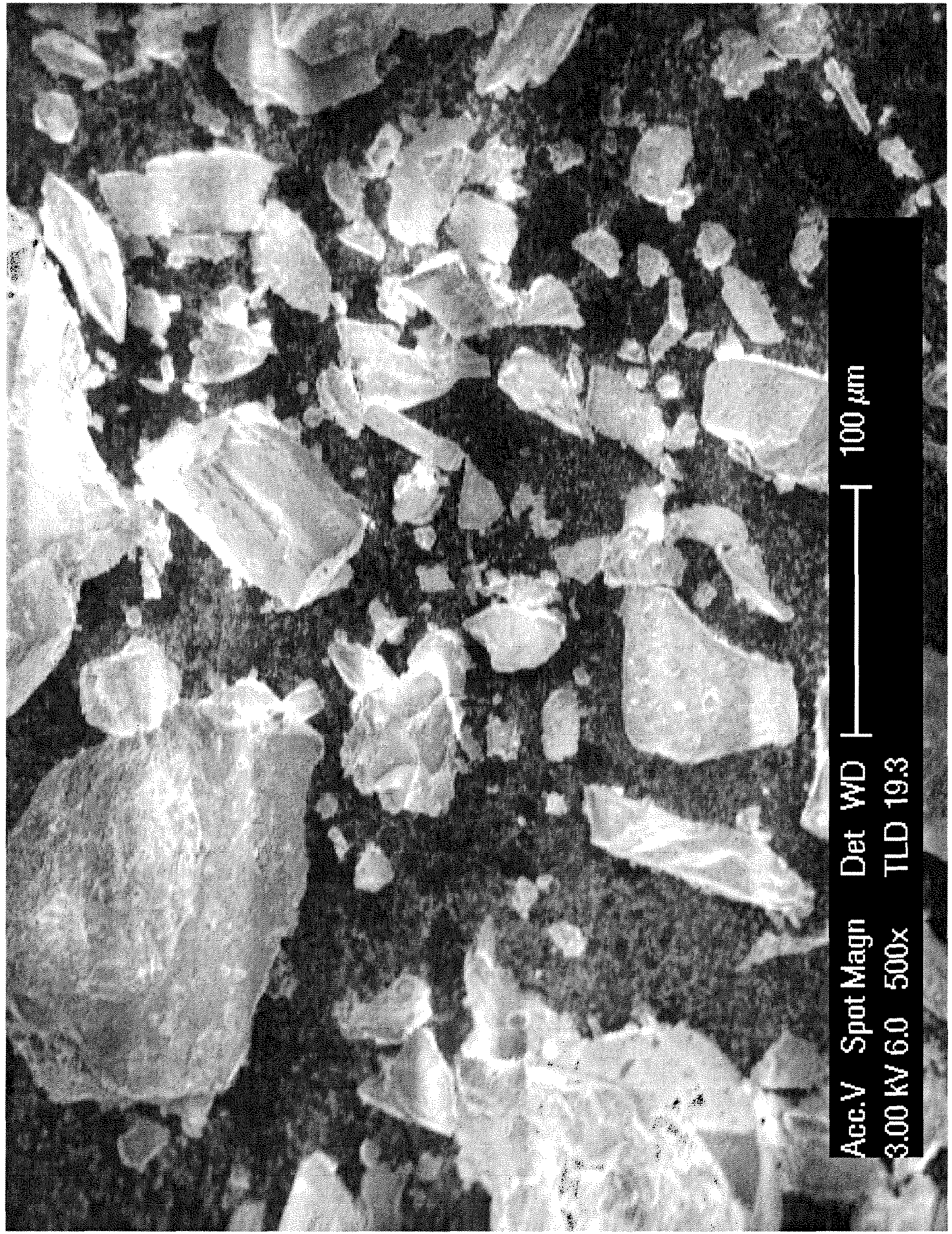

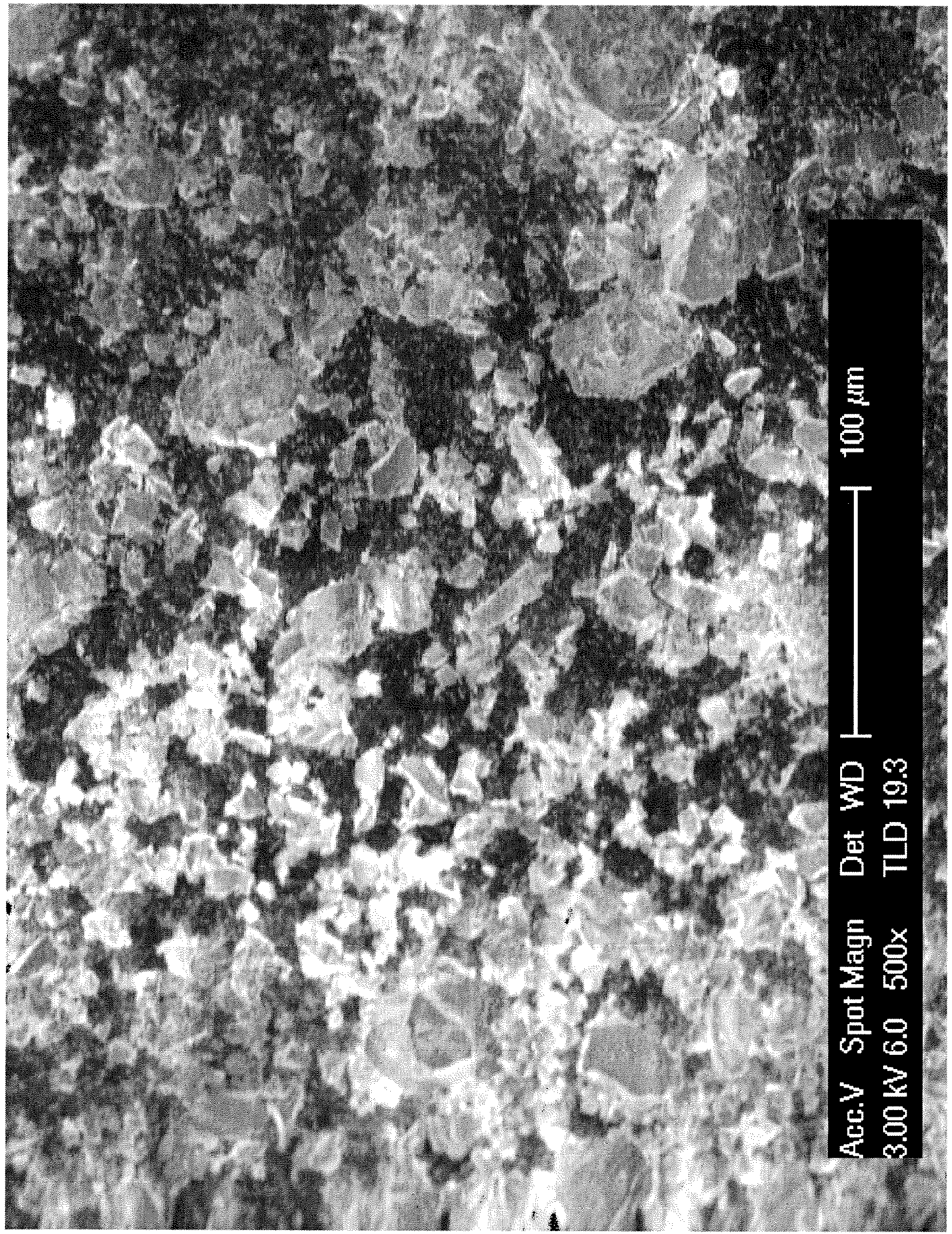

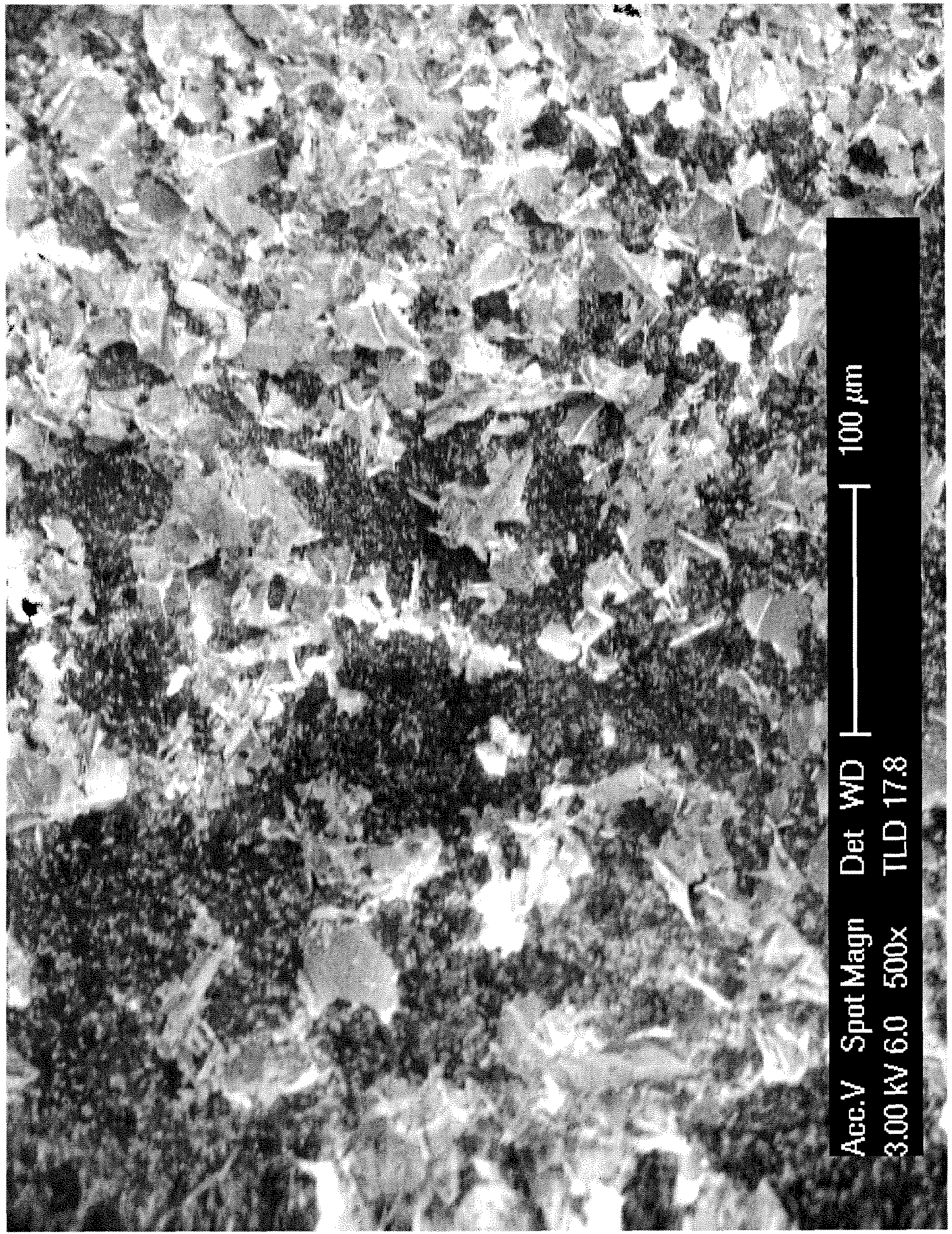

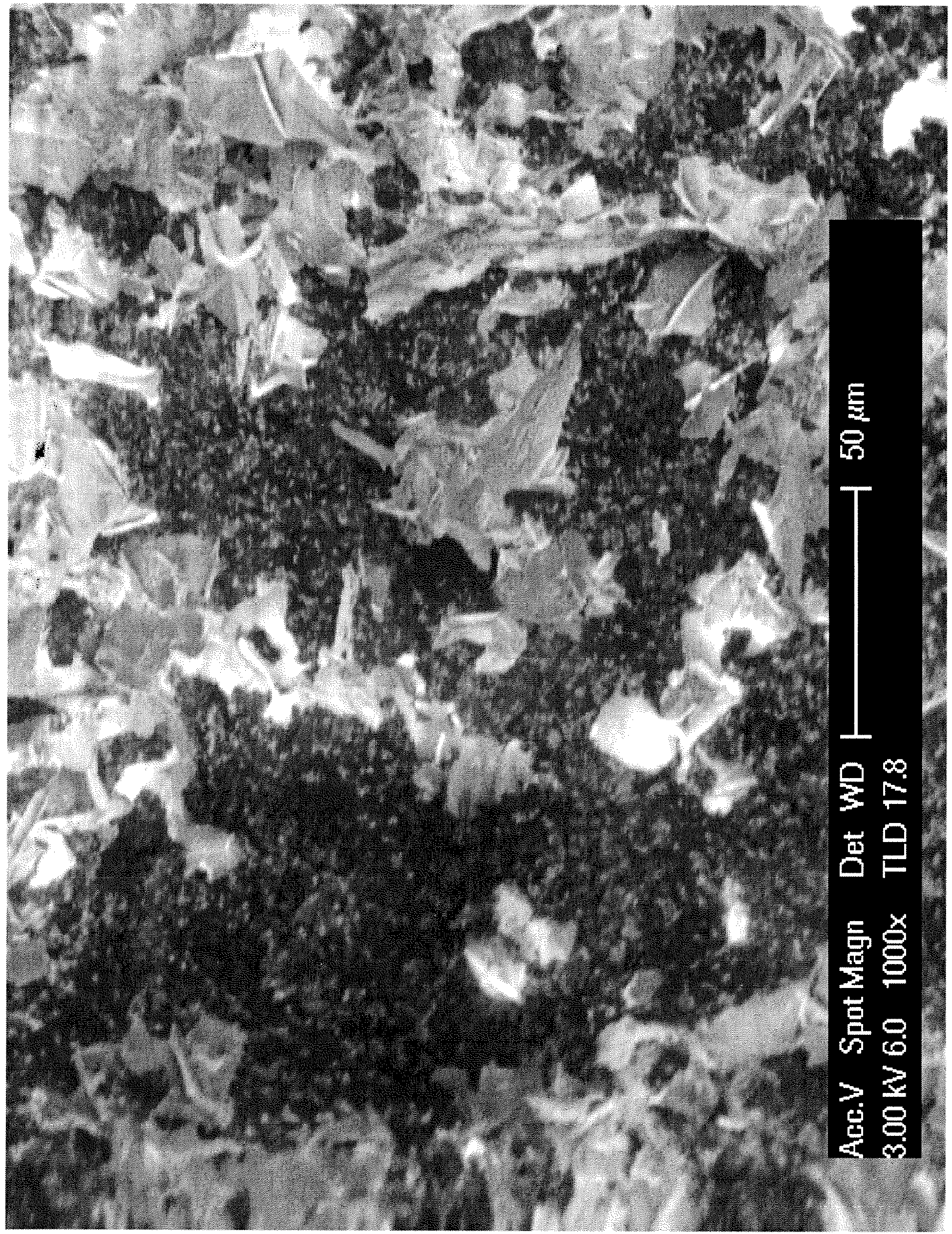

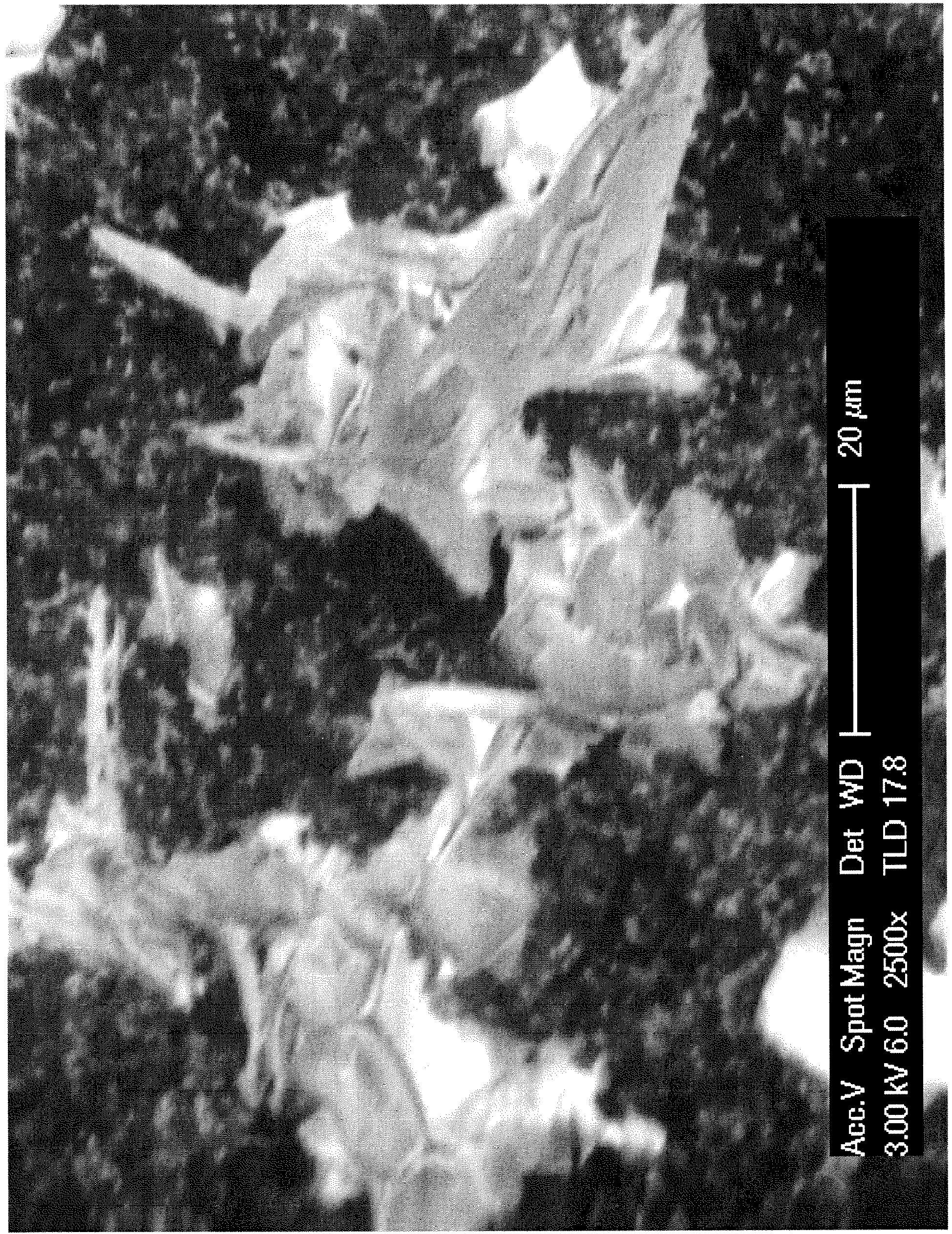

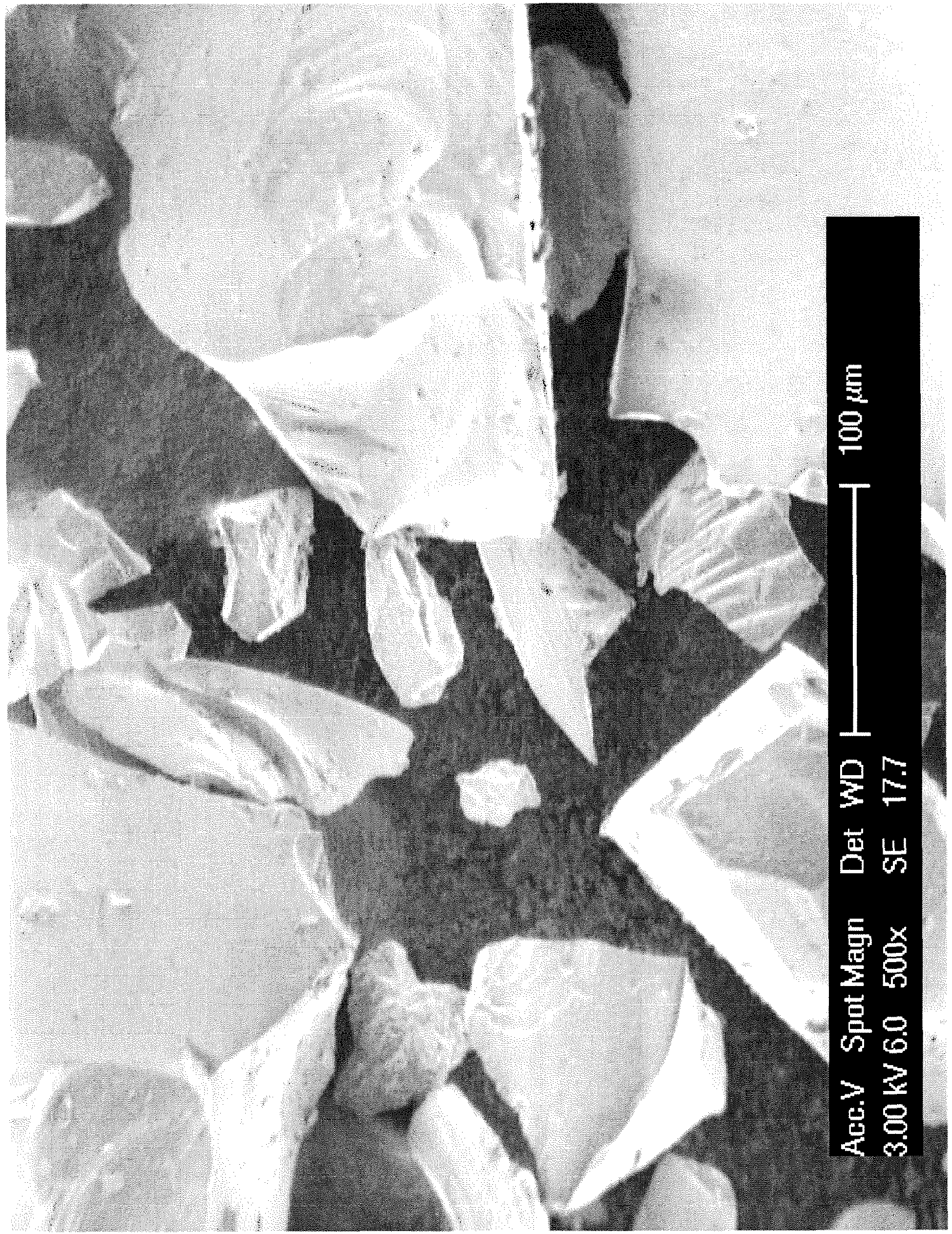

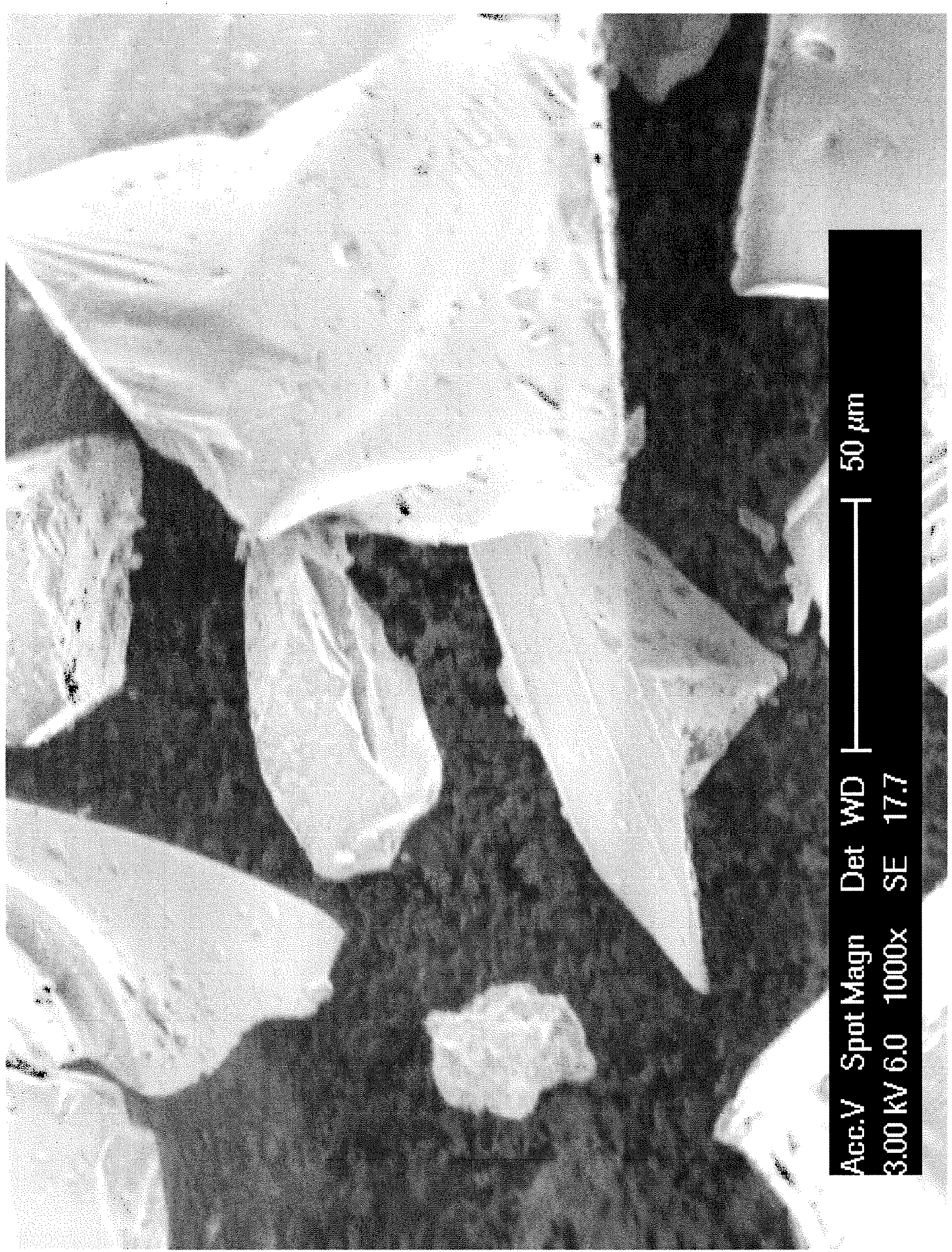

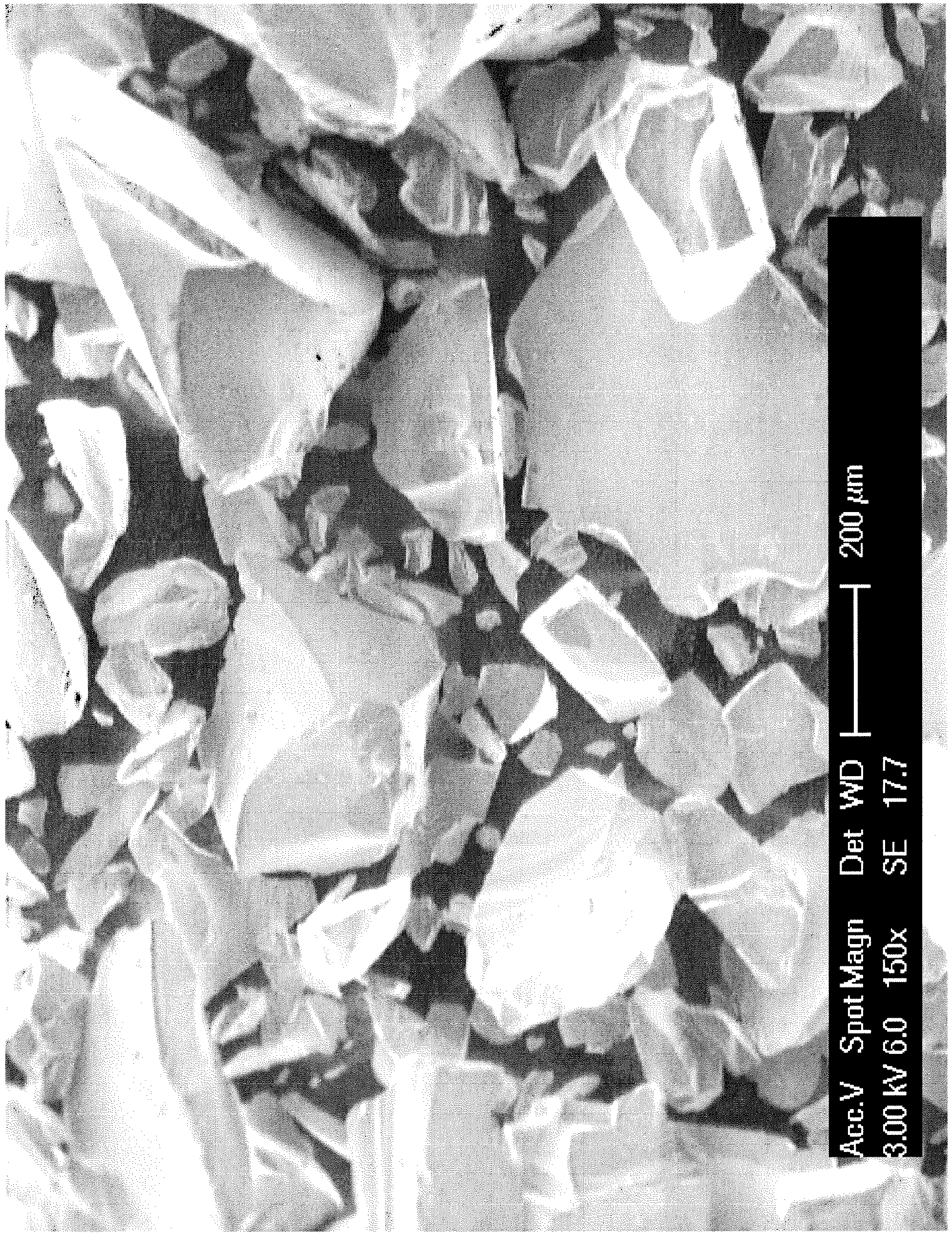

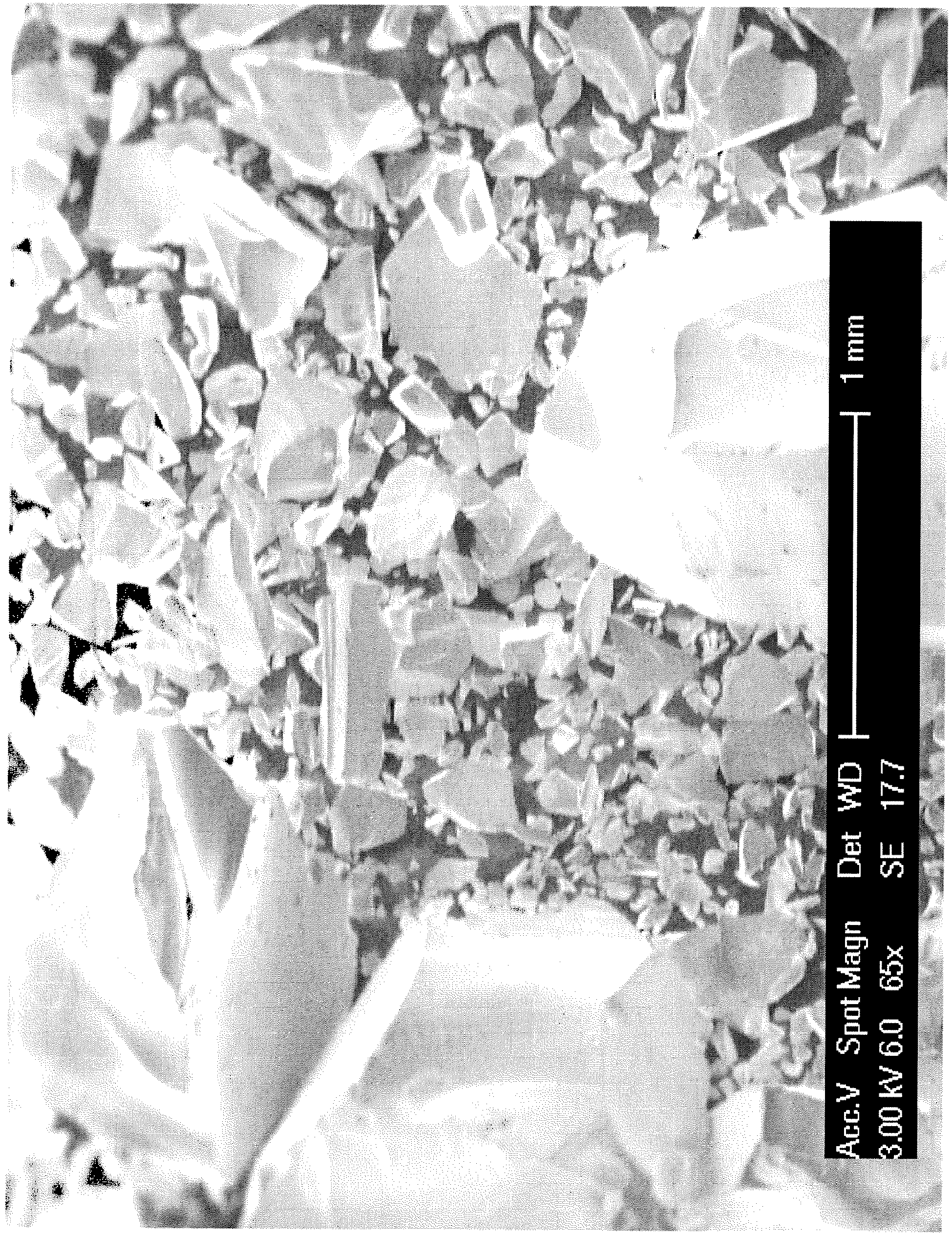

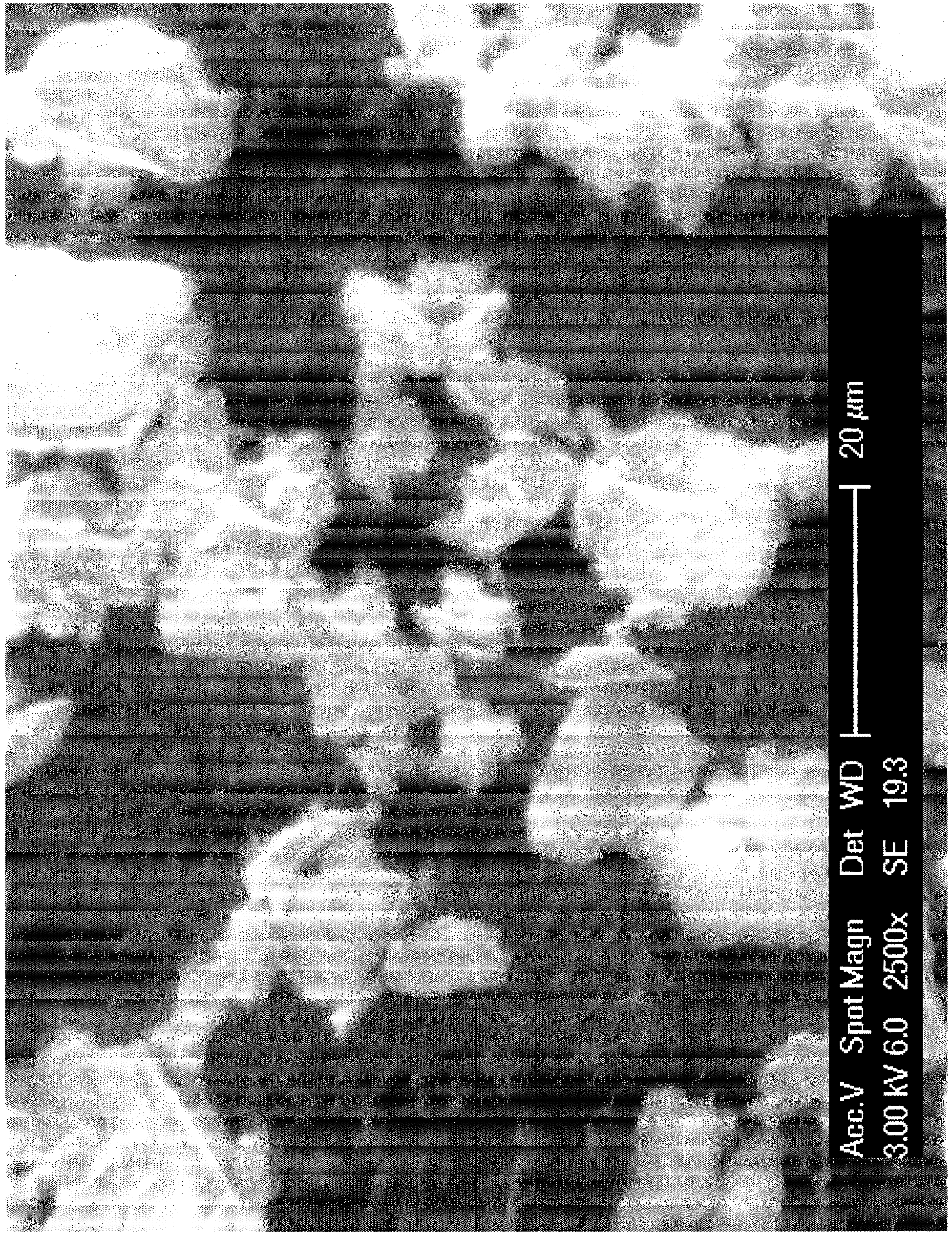

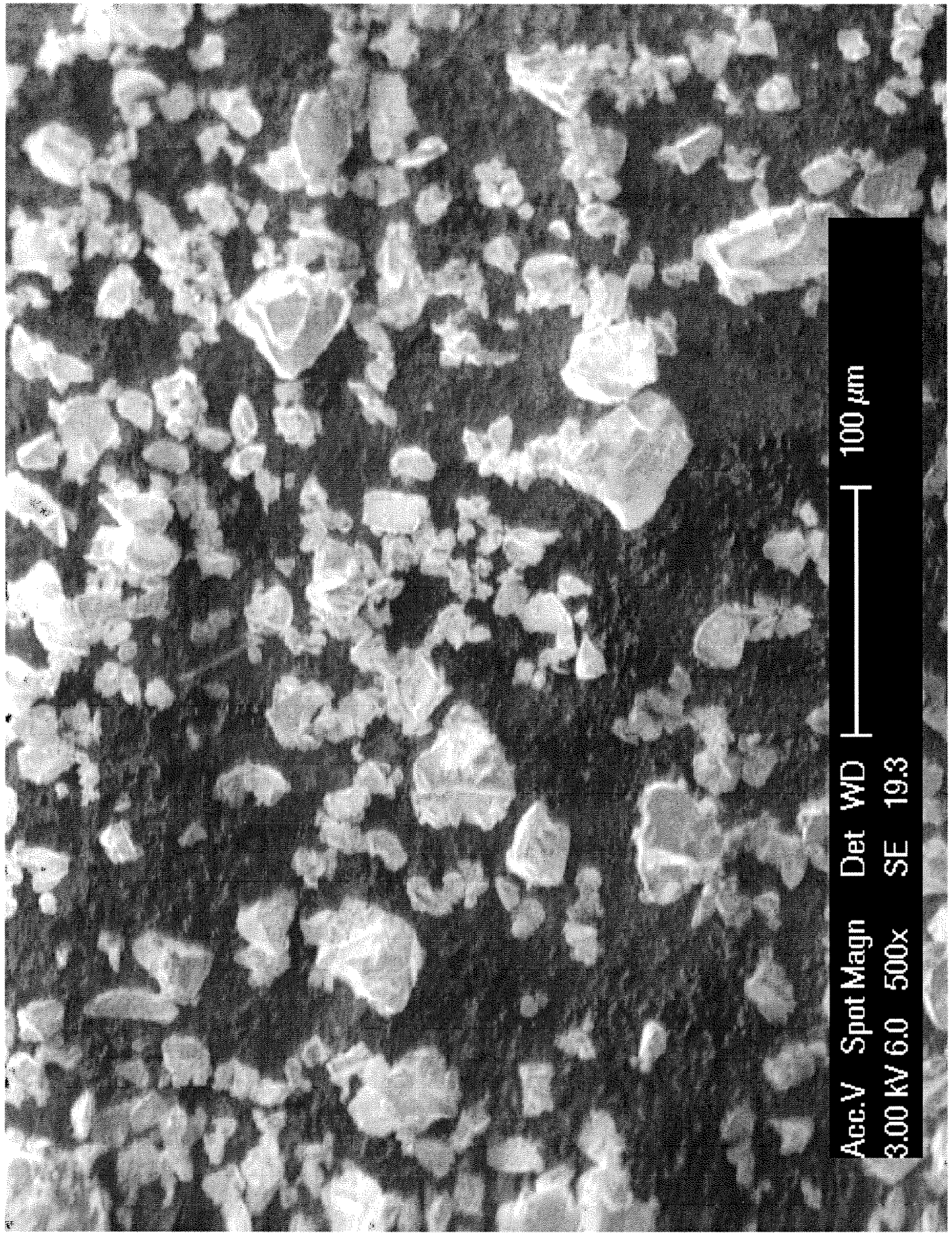

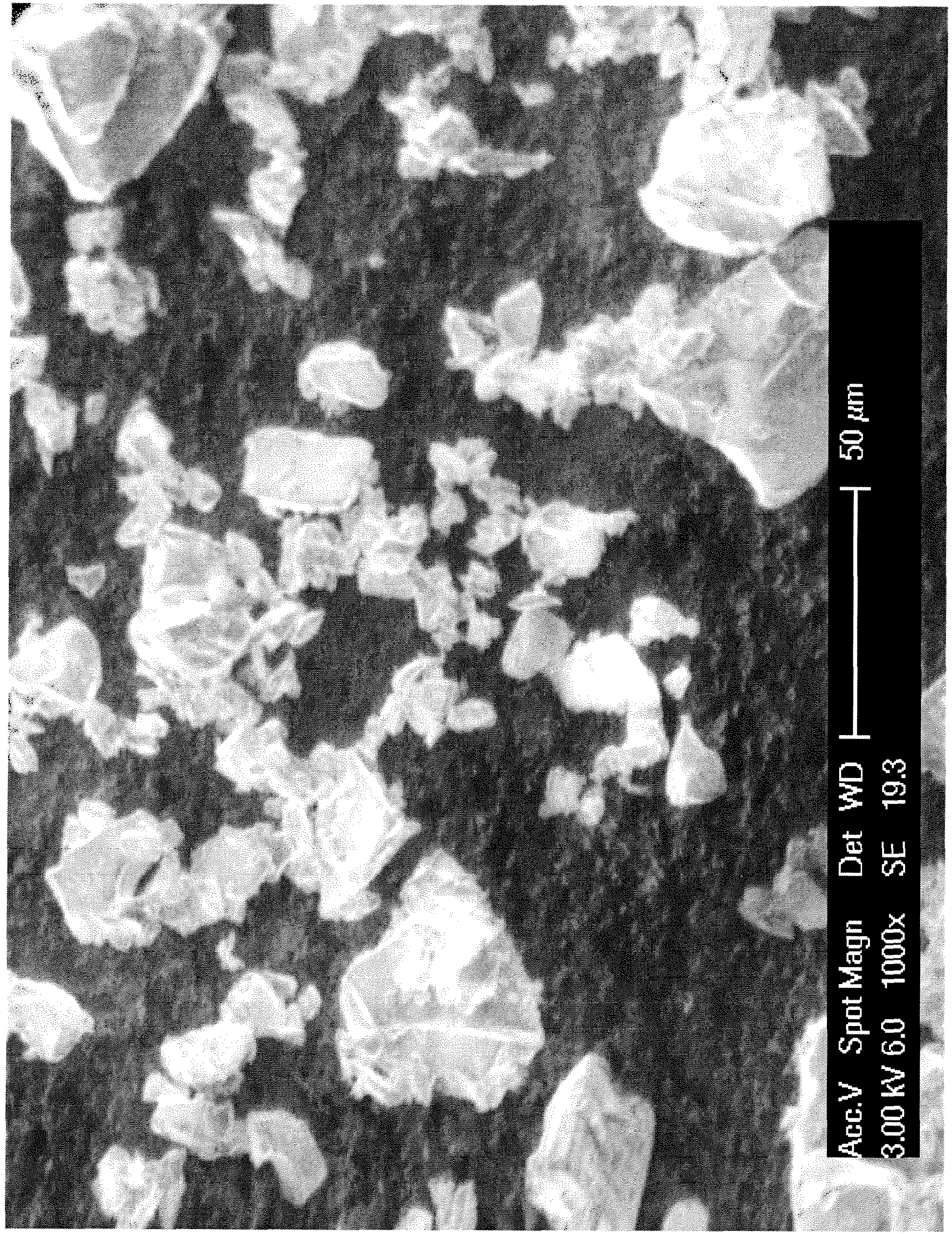

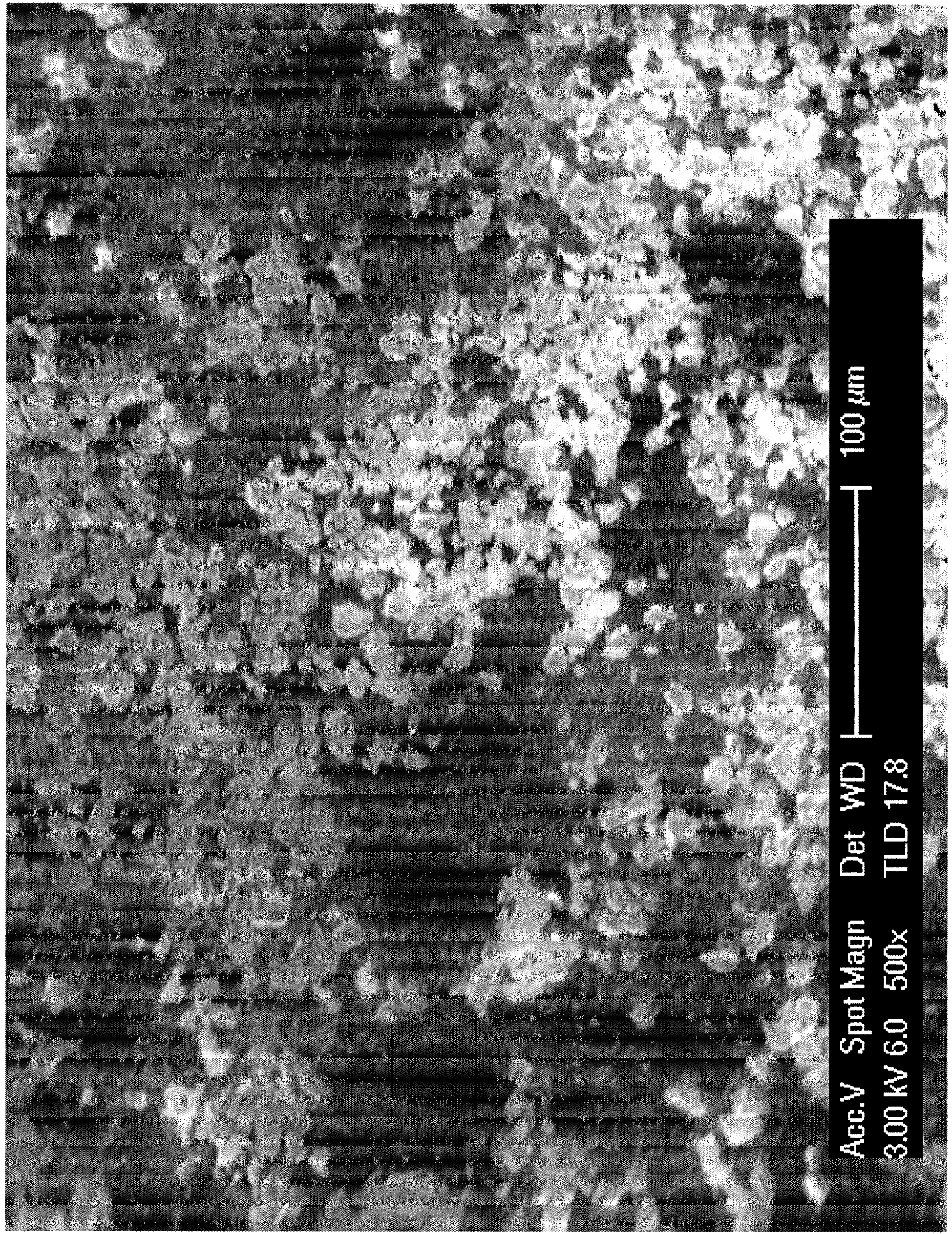

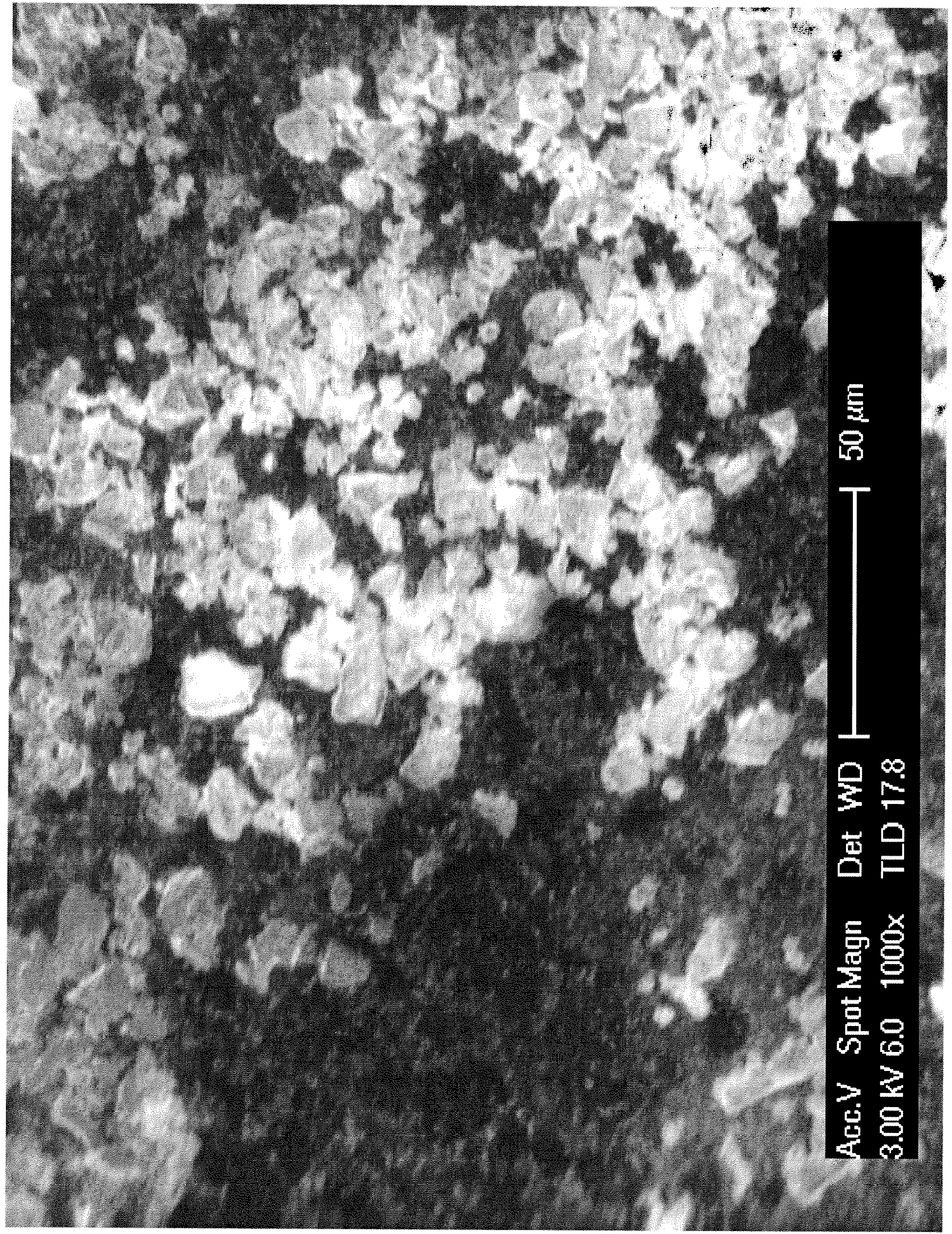

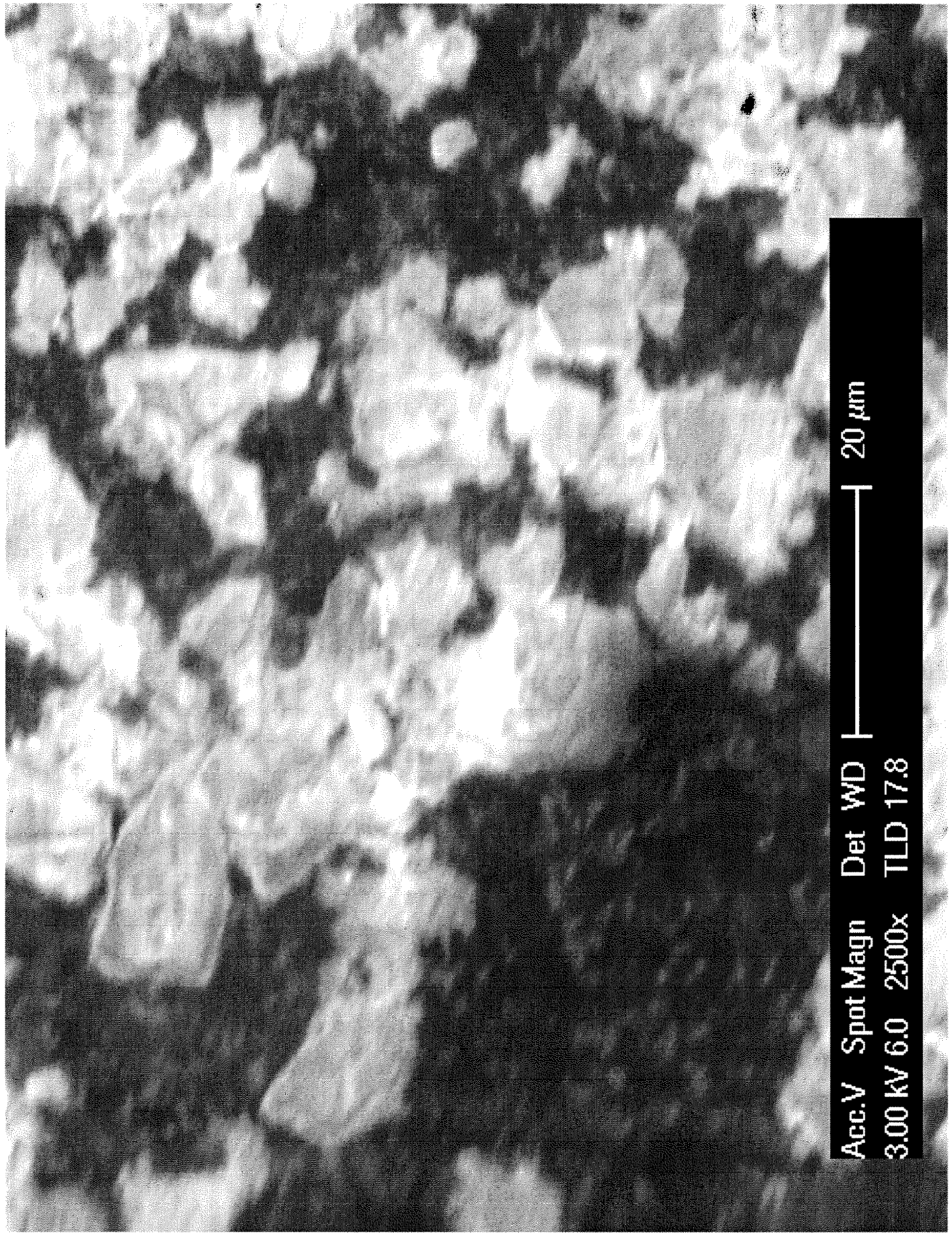

## Claims

1. A method of increasing flow of a fluid through a process equipment including:
feeding a fluid comprising a thermoplastic into said process equipment;
feeding a material into said process equipment, said material being comprised of particles having a sharp blade-like surface, said particles having an aspect ratio greater than 0.7, a Mohs hardness value of greater than 2.5, wherein said particles are selected from the group comprising perlite, sodium potassium aluminium silicate, glass sand, steel, pumice, flint, slate, granite, aluminium, brass, ceramics, calcite, fluorite, apatite, orthoclase, quartz, topaz, corundum, diamond, pure gold, silver, copper penny, platinum, iron, titanium, iron pyrite, vitreous pure silica, garnet, carborundum, ultrahard fullerite and aggregated diamond nanorods;
dispersing said the material within the fluid wherein said material migrates to a boundary layer of said fluid near said process equipment to promote kinetic mixing within said fluid, said kinetic mixing taking place in a non-linear viscosity zone resulting in reduced coefficient of friction with said process equipment caused by drag due to the boundary layer.

2. The method according to claim 1, wherein said particles are selected from the group comprising sodium potassium aluminium silicate and perlite.

3. The method according to claim 1, wherein said process equipment has connections that are open ended single pass or are continuous for recycle operations.

4. The method according to claim 1, wherein said fluid is filled.

5. The method according to claim 1, wherein said fluid is unfilled.

6. The method according to claim 1 wherein said process equipment has a barrel and screw.

7. The method according to claim 6 wherein said process equipment is an extruder.

8. The method according to claim 6 wherein said process equipment is part of an injection molding process.

9. The method according to claim 1 wherein said fluid incorporates said material so that said fluid and said material are fed into said process equipment simultaneously.

10. The method according to claim 1 further comprising:
feeding an additive into said process equipment;
dispersing said additive in said fluid.

11. The method according to claim 10 wherein said additive is a filler.

12. The method according to claim 10 wherein said additive is a pigment.

13. The method according to claim 10 wherein said additive is a fiber.

14. The method according to claim 1 further comprising:
cleaning of parts of said process equipment by hard particle interaction with said parts through tumbling of said particles during said step of kinetic mixing.

## Patentansprüche

1. Verfahren zum Erhöhen eines Fluidstroms durch eine Verfahrensausrüstung, das beinhaltet:
Zuführen eines einen Thermoplast umfassenden Fluids in die Verfahrensausrüstung;
Zuführen eines Materials in die Verfahrensausrüstung, wobei das Material aus Teilchen mit einer scharfen Klingen-artigen Oberfläche gebildet ist, die Teilchen ein Längenverhältnis größer als 0,7, einen Mohschen Härtewert von größer als 2,5 aufweisen, wobei die Teilchen ausgewählt sind aus der Gruppe, umfassend Perlit, Natriumkaliumaluminiumsilicat, Quarzsand, Stahl, Bimsstein, Flint, Schiefer, Granit, Aluminium, Messing, Keramik, Calcit, Fluorit, Apatit, Kalifeldspat, Quarz, Topas, Korund, Diamant, reines Gold, Silber, Tafel-Kupfer, Platin, Eisen, Titan, Eisenpyrit, reines Quarzglas, Granat, Karborund, ultrahartes Fullerit und aggregierte Diamant-Nanostäbchen;
Dispergieren des Materials in dem Fluid, wobei das Material zu einer Grenzschicht des Fluids nahe der Verfahrensausrüstung wandert, um kinetisches Vermischen in dem Fluid zu fördern, wobei das kinetische Vermischen in einer nicht-linearen Viskositätszone stattfindet, die zu einem verminderten Reibungskoeffizienten mit der Verfahrensausrüstung, verursacht durch Hemmung auf Grund der Grenzschicht, führt.

2. Verfahren nach Anspruch 1, wobei die Teilchen ausgewählt sind aus der Gruppe, umfassend Natriumkaliumaluminiumsilicat und Perlit.

3. Verfahren nach Anspruch 1, wobei die Verfahrensausrüstung Anschlüsse aufweist, die offenendig zum Einmaldurchgang sind oder durchgehend für Recycle-Vorgänge sind.

4. Verfahren nach Anspruch 1, wobei das Fluid gefüllt ist.

5. Verfahren nach Anspruch 1, wobei das Fluid ungefüllt ist.

6. Verfahren nach Anspruch 1, wobei die Verfahrensausrüstung einen Zylinder und eine Schnecke aufweist.

7. Verfahren nach Anspruch 6, wobei die Verfahrensausrüstung ein Extruder ist.

8. Verfahren nach Anspruch 6, wobei die Verfahrensausrüstung Teil von einem Spritzgießformverfahren ist.

9. Verfahren nach Anspruch 1, wobei das Fluid das Material so einarbeitet, dass das Fluid und das Material gleichzeitig in die Verfahrensausrüstung eingeführt werden.

10. Verfahren nach Anspruch 1, weiterhin umfassend:
Zuführen eines Additivs in die Verfahrensausrüstung;
Dispergieren des Additivs in dem Fluid.

11. Verfahren nach Anspruch 10, wobei das Additiv ein Füllstoff ist.

12. Verfahren nach Anspruch 10, wobei das Additiv ein Pigment ist.

13. Verfahren nach Anspruch 10, wobei das Additiv eine Faser ist.

14. Verfahren nach Anspruch 1, weiterhin umfassend:
Reinigen von Teilen der Verfahrensausrüstung durch harte Teilchen-Wechselwirkung mit den Teilen durch Scheuern der Teilchen während des Schritts von kinetischem Vermischen.

## Revendications

1. Procédé pour augmenter le débit d'un fluide à travers un équipement de processus incluant :
l'amenée d'un fluide comprenant un thermoplastique dans ledit équipement de processus;
l'amenée d'un matériau dans ledit équipement de processus, ledit matériau étant composé de particules présentant une surface semblable à une lame tranchante, lesdites particules présentant un rapport d'aspect supérieur à 0,7, une valeur de dureté Mohs supérieure à 2,5, dans lequel lesdites particules sont choisies dans le groupe constitué par la perlite, le silicate d'aluminium sodique et potassique, le sable de verrerie, l'acier, la pierre ponce, le silex, l'ardoise, le granit, l'aluminium, le laiton, la céramique, la calcite, la fluorite, l'apatite, l'orthose, le quartz, la topaze, le corindon, le diamant, l'or pur, l'argent, des pastilles de cuivre, le platine, le fer, le titane, la pyrite de fer, la silice vitreuse pure, le grenat, le carborundum, la fullérite ultra dure et les nanobaguettes de diamants agrégées ;
la dispersion dudit matériau au sein du fluide dans lequel ledit matériau migre jusqu'à une couche limite dudit fluide près dudit équipement de processus pour favoriser un mélange cinétique au sein dudit fluide, ledit mélange cinétique ayant lieu dans une zone de viscosité non linéaire aboutissant à un coefficient de friction réduit avec ledit équipement de processus provoqué par la traînée due à la couche limite.

2. Procédé selon la revendication 1, dans lequel lesdites particules sont choisies dans le groupe constitué par le silicate d'aluminium sodique et potassique et la perlite.

3. Procédé selon la revendication 1, dans lequel ledit équipement de processus présente des raccordements qui sont un passage unique ouvert ou qui sont continus pour des opérations de recyclage.

4. Procédé selon la revendication 1, dans lequel ledit fluide est chargé.

5. Procédé selon la revendication 1, dans lequel ledit fluide n'est pas chargé.

6. Procédé selon la revendication 1, dans lequel ledit équipement de processus présente un cylindre et une vis.

7. Procédé selon la revendication 6, dans lequel ledit équipement de processus est une extrudeuse.

8. Procédé selon la revendication 6, dans lequel ledit équipement de processus est une partie d'un processus de moulage par injection.

9. Procédé selon la revendication 1, dans lequel ledit fluide incorpore ledit matériau de sorte que ledit fluide et ledit matériau sont amenés dans ledit équipement de processus de façon simultanée.

10. Procédé selon la revendication 1, comprenant en outre :
l'amenée d'un additif dans ledit équipement de processus ;
la dispersion dudit additif dans ledit fluide.

11. Procédé selon la revendication 10, dans lequel ledit additif est une charge.

12. Procédé selon la revendication 10, dans lequel ledit additif est un pigment.

13. Procédé selon la revendication 10, dans lequel ledit additif est une fibre.

14. Procédé selon la revendication 1, comprenant en outre :
le nettoyage de parties dudit équipement de processus par une interaction de particules dures avec lesdites parties par tournoiement desdites particules pendant ladite étape de mélange cinétique.
